(19) Europäisches Patentamt
European Patent Office
Office européen des brevets

(11) EP 3 521 879 A1

(12) DEMANDE DE BREVET EUROPEEN

(43) Date de publication:
07.08.2019 Bulletin 2019/32

(51) Int Cl.:
G02B 6/124 (2006.01)          G02B 6/30 (2006.01)
G02B 6/42 (2006.01)

(21) Numéro de dépôt: 19155161.3

(22) Date de dépôt: 01.02.2019

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
KH MA MD TN

(30) Priorité: 05.02.2018 FR 1850955

(71) Demandeur: Commissariat à l'énergie atomique
et aux énergies alternatives
75015 Paris (FR)

(72) Inventeurs:
• MENEZO, Sylvie
38054 GRENOBLE (FR)
• BOUTAMI, Salim
38054 GRENOBLE (FR)
• MOUREY, Bruno
38054 GRENOBLE (FR)

(74) Mandataire: Brevalex
95, rue d'Amsterdam
75378 Paris Cedex 8 (FR)

(54) **PUCE PHOTONIQUE À STRUCTURE DE COLLIMATION INTÉGRÉE**

(57)    L'invention porte sur la mise en forme de faisceaux optiques en entrées/sorties d'une puce photonique et l'élargissement spectral de la lumière couplée à cette puce. La puce photonique (1) comprend une couche de guidage de la lumière (12) supportée par un substrat (10). La puce inclut au moins une structure de guidage de la lumière en silicium (121) couplée d'un côté à un coupleur vertical (122) et d'un autre côté à un composant optique intégré dans la couche de guidage de la lumière. La puce photonique présente une face avant (F1) du côté réseau de couplage surfacique (122) et une face arrière (F2) du côté du substrat (10). Une structure de collimation (15) de type lentille numérique est intégrée au niveau de la face arrière (F2) pour collimater la taille de mode du faisceau de lumière incident sur la lentille et en provenance du coupleur vertical. L'invention concerne également le procédé de fabrication d'une telle puce.

FIG. 8

**Description**

**DOMAINE TECHNIQUE**

Le domaine de l'invention est celui de la photonique intégrée sur puce. L'invention concerne une puce photonique qui dispose d'entrée(s)/sortie(s), vers/depuis la puce, de faisceaux lumineux pour couplage avec un dispositif extérieur, par exemple avec une autre puce photonique, une fibre optique ou un ensemble de fibres optiques, ou pour réception/émission d'un faisceau de lumière en propagation libre. Selon l'invention, les entrée(s)/sortie(s), vers/depuis la puce, autorisent le couplage de faisceaux lumineux collimatés avec une taille de mode potentiellement élargie par rapport à la taille de mode d'une fibre monomode, un axe potentiellement perpendiculaire à la surface de la puce (et donc un désalignement angulaire axial potentiellement nul avec l'axe d'un faisceau issu d'un ensemble 'lentille + fibre' perpendiculaire à la surface de la puce), et une bande spectrale potentiellement élargie.

La puce selon l'invention peut intégrer des composants tels que des composants passifs (guides d'onde, multiplexeurs en longueurs d'onde, etc.) et des composants actifs (modulateurs, photodétecteurs, etc.). La puce photonique selon l'invention peut également intégrer un ou plusieurs lasers hybrides, tel que des lasers présentant un milieu à gain réalisé en matériaux semi-conducteurs III-V sur un substrat silicium.

Une telle puce peut par exemple être destinée à fournir un peigne de longueurs d'onde émis par une pluralité de lasers hybrides à une autre puce photonique, ou à constituer un circuit photonique intégré de type émetteur-récepteur couplé à un réseau de fibres optiques, ou à émettre un ou plusieurs faisceaux de lumière en propagation libre.

**ÉTAT DE LA TECHNIQUE ANTÉRIEURE**

Les puces photoniques comprenant un circuit photonique intégré (« Photonic Integrated Circuit ») sont généralement fabriquées sur des substrats SOI (« Silicon On Insulator » pour silicium sur isolant) pour la technologie photonique intégrée sur silicium ou sur substrats en phosphure d'indium (InP) ou en arséniure de gallium (GaAs) pour la technologie photonique intégrée dite III-V.

En photonique intégrée sur silicium, une source de lumière hybride III-V / Silicium est formée par l'empilement sur un substrat SOI de couches III-V constituant le matériau à gain d'un laser. La lumière émise dans le matériau à gain est couplée avec une structure de guidage de la lumière formée dans la couche de silicium superficielle du substrat SOI, sous-jacente aux couches III-V.

La structure de guidage de la lumière accommode les composants photoniques silicium, tels que des composants passifs (par exemple des guides d'onde, des multiplexeurs/démultiplexeurs optiques, des anneaux résonants) et des composants actifs (par exemple des modulateurs formés par des dopages P et N de la couche de silicium superficielle, ou/et des photodétecteurs par exemple formés par épitaxie de germanium sur silicium).

Afin de pouvoir extraire la lumière de la puce photonique en direction d'un dispositif extérieur tel qu'une fibre optique, le composant le plus couramment utilisé en photonique silicium est le réseau de couplage surfacique. Un tel réseau permet, d'une part, d'adapter la taille du mode optique se propageant dans les guides d'onde de la puce photonique à la taille du mode optique se propageant dans les fibres monomodes standards, c'est-à-dire un diamètre de 9.2$\mu$m, et, d'autre part, de passer d'une propagation guidée dans le plan de la puce photonique à une propagation en espace libre quasi-verticale au plan de la puce et du côté opposé au substrat de la puce. Ceci est obtenu en gravant un réseau dans la couche superficielle de silicium. Un tel composant est par exemple décrit dans : « Apodized Waveguide Grating Couplers for Efficient Coupling to Optical Fibers », IEEE PHOTONICS TECHNOLOGY LETTERS, VOL. 22, NO. 15, AUGUST 1, 2010, de Xia Chen et alter. Le réseau de couplage surfacique constitue un premier type de coupleur vertical.

En technologie silicium, ce composant permet ainsi de coupler la lumière d'un guide d'onde dans le plan de la puce photonique à une fibre monomode clivée faisant un angle avec la verticale, couramment d'environ 8° dans un matériau en verre (soit environ 11° dans l'air). Ses pertes sont de 1 à 4 dB optiques lorsque l'alignement géométrique entre le réseau de couplage surfacique et la fibre monomode est optimal. La tolérance d'alignement réseau-fibre, caractérisée comme le désalignement radial par rapport à l'alignement optimal qui engendre 1 dB de pertes supplémentaires, est d'environ 2 $\mu$m.

Il est également à noter que la bande passante spectrale d'un réseau de couplage surfacique (caractérisée comme la bande pour laquelle les pertes sont limitées, par exemple inférieures à 1 dB) est étroite, généralement inférieure à 30nm. Ceci est un point très limitant par exemple dans les applications de multiplexage en longueurs d'onde de type grossier (CWDM pour « Coarse Wavelength Division Multiplexing ») pour lesquelles plusieurs longueurs d'onde (par exemple quatre longueurs d'ondes) espacées de 20nm doivent être multiplexées et transmises dans une unique fibre. Le signal lumineux présente dans cet exemple une bande spectrale de 4 x 20nm et les pertes aux extrémités de la bande sont alors augmentées de plusieurs dB par rapport aux pertes au centre de la bande. A titre d'exemple, les pertes de transmission d'un réseau de couplage surfacique sont de 2,7 dB à la longueur d'onde centrale 1290nm, alors qu'elles sont de 5,5 dB à la longueur d'onde 1330nm espacée de 2*20nm de la longueur d'onde centrale 1290nm.

Pour résoudre ce problème, des réseaux de couplage surfaciques relativement complexes ont été proposés qui nécessitent une couche additionnelle en nitrure de silicium structurée au-dessus de la couche de silicium structurée. On pourra se rapporter à l'article de Sacher, Wesley D., et al. intitulé "Wide bandwidth and high coupling efficiency Si3N4-on-SOI dual-level grating coupler", Optics express 22.9 (2014): 10938-10947. Par ailleurs ce type de solution ne fonctionne que pour une lumière polarisée (par exemple TE), mais aucune solution n'a été proposée permettant de coupler dans la puce photonique une lumière de polarisation quelconque.

Seules les solutions de couplage dites par la tranche de la puce (« butt coupling ») permettent d'augmenter la bande spectrale du couplage optique tout en fonctionnant pour une lumière de polarisation quelconque. Un tel coupleur par la tranche est par exemple décrit par B. Ben Bakir et al. dans « Low loss (<1dB) and Polarization-Insensitive Edge Fiber Couplers fabricated on 200mm Silicon-on-Insulator wafers », PTL 2009. Le coupleur 'horizontal' a ainsi une taille de mode Do d'environ $3\mu$m. Il est indispensable d'utiliser en regard une fibre dotée d'une microlentille de diamètre de mode identique. La tolérance d'alignement entre cette fibre et la puce photonique est très inférieure à $1\mu$m.

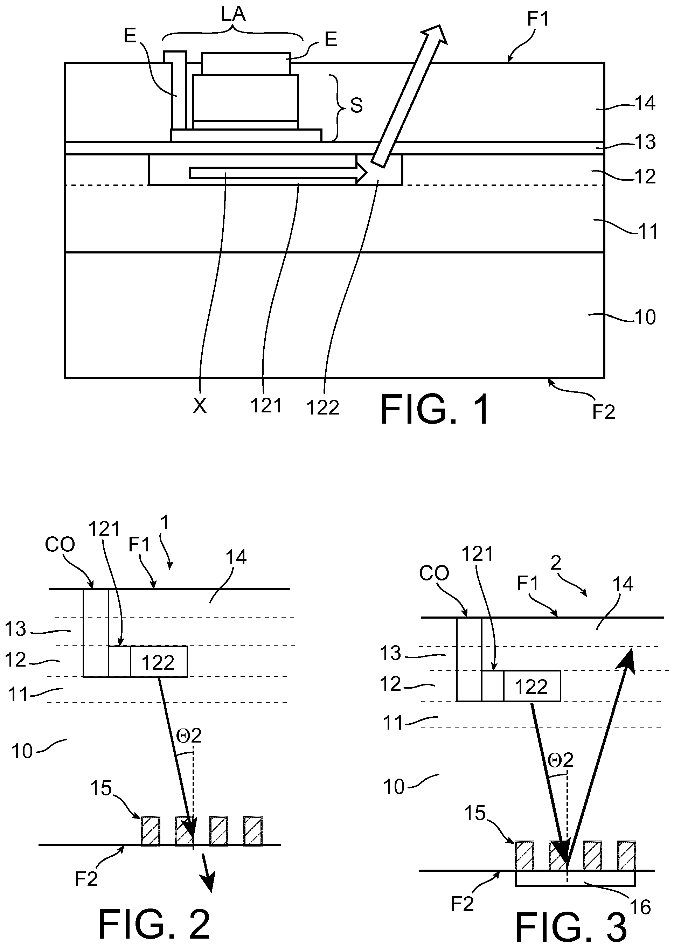

On a représenté sur la figure 1 une vue en coupe schématique d'une puce photonique intégrant une structure laser hybride à semi-conducteurs III-V sur substrat silicium sur isolant. La puce photonique comprend une couche en silicium de guidage de la lumière 12 supportée par un substrat silicium 10 et recouverte par une première couche 13, généralement en SiO2, servant d'interface de collage entre l'empilement à semi-conducteurs III-V et la couche de guidage en silicium. Cette couche 13 est optionnelle et le collage avec l'empilement III-V peut également se faire directement. La couche de guidage de la lumière 12 porte les composants photoniques (guide d'onde, réseau de couplage surfacique, modulateur PN, etc). La couche de guidage de la lumière 12 est séparée du substrat silicium 10 par une couche d'oxyde enterré 11 (BOX pour « Buried Oxide Layer »).

La puce photonique intègre un laser LA hybride à semi-conducteurs III-V sur Silicium. Le laser LA comporte une structure à gain sur la première couche 13. La structure à gain comprend un empilement S de couches de matériaux III-V dont les couches N et P sont en contact avec les électrodes E. Le laser LA est encapsulé dans une seconde couche dite d'encapsulation 14, par exemple en oxyde de silicium ou en nitrure de silicium. La couche d'encapsulation 14 comprend les électrodes E du laser ainsi que les niveaux de métal d'interconnexion électrique avec les composants actifs de la couche 12 (tels que le modulateur) de la puce photonique. Cette couche est connue sous le nom de « Back End Of Line » (BEOL) dans les procédés de fabrication utilisés en microélectronique.

La puce photonique présente ainsi une face avant F1 du côté de la couche d'encapsulation 14 et une face arrière F2 du côté du substrat 10. La couche de guidage de la lumière 12 inclut une structure de guidage de la lumière 121 optiquement couplée au laser pour recevoir, filtrer et guider la lumière émise par celui-ci. La couche de guidage de la lumière 12 inclut également un réseau de couplage surfacique 122 configuré pour recevoir la lumière depuis la structure de guidage de la lumière 121 et former à partir de celle-ci un faisceau de lumière dirigé en direction de la face avant F1 de la puce photonique.

La structure de guidage de la lumière comprend les différents composants photoniques, passifs ou actifs, jusqu'au port d'entrée/sortie constitué par le réseau de couplage surfacique 122. Elle comprend notamment un guide d'onde 121 et le réseau de couplage surfacique 122, avec le réseau de couplage surfacique 122 ici représenté selon une coupe longitudinale, la lumière se propageant dans ce guide d'onde dans le plan de la figure, par exemple dans la direction x lorsqu'il s'agit ici en figure 1 d'extraire de la lumière depuis la puce photonique avec le réseau de couplage surfacique 122.

La couche d'encapsulation 14 comprend généralement des niveaux de métal d'interconnexion électrique de la puce photonique. Cette couche est ainsi constituée de matériaux diélectriques et de lignes gravées de métal. Une puce électronique destinée à piloter ou lire les composants photoniques actifs de la puce photonique (modulateurs, photo-détecteurs) est généralement reportée sur la face avant F1 de la puce photonique.

Afin d'augmenter la tolérance d'alignement entre le réseau de couplage surfacique et une fibre optique et rendre ainsi les opérations d'alignement moins complexes et notamment réalisables selon des techniques d'alignement passif moins coûteuses, il a été proposé dans l'article de S. Bernabé et al., "On-Board Silicon Photonics-Based Transceivers With 1-Tb/s Capacity", in IEEE Transactions on Components, Packaging and Manufacturing Technology, vol. 6, n°7, Juillet 2016, d'avoir recours à un système de deux lentilles composé d'une première lentille solidaire de la puce photonique et d'une deuxième lentille solidaire de la fibre optique. La première lentille d'épaisseur Th permet d'élargir la taille de mode du faisceau optique en sortie de la puce, par exemple de Do= $9.2\mu$m à Di = $100\mu$m et de collimater le faisceau de taille de mode élargi, incident sur elle. La seconde lentille permet d'augmenter la taille de mode de la fibre monomode de 9.2 $\mu$m à une taille de mode adaptée à la première lentille, ici $100\mu$m. Ce système peut exploiter un connecteur à lentille dans lequel on vient insérer la fibre optique la positionnant de ce fait vis-à-vis de la deuxième lentille. La première lentille doit quant à elle être alignée avec la puce photonique de manière très précise, puis doit être solidarisée avec elle. La tolérance d'alignement entre l'ensemble puce + première lentille et l'ensemble deuxième lentille + fibre est alors augmentée à +/- 20$\mu$m.

Afin d'élargir et de collimater une source de lumière de longueur d'onde λ et de taille de mode Do=2*wo = 9.2$\mu$m en sortie du réseau de couplage surfacique, la première lentille doit avoir une longueur de focale dans l'air égale à Fair= Di. (π. wo/2λ), Di étant la taille du faisceau élargi en sortie de la première lentille. Pour obtenir un faisceau collimaté élargi avec un diamètre Di d'environ 100 μm, et en faisant par simplification l'hypothèse d'un angle de sortie du réseau de couplage surfacique par rapport à la verticale de 0°, la lentille, convexe, réalisée en verre de silice d'indice 1.45 à la longueur d'onde 1.31μm, doit présenter une épaisseur d'environ 860 μm, correspondant à une longueur de focale dans l'air d'environ 600 μm.

Il n'est pas envisageable de disposer d'une telle épaisseur de verre entre le réseau de couplage surfacique 122 et la face avant F1 de la puce photonique. En effet la couche d'encapsulation 14 présente généralement une épaisseur d'environ 3μm seulement. La lentille ne peut donc être intégrée au niveau de cette couche d'encapsulation 14 mais doit être rapportée sur la face avant de la puce photonique de manière très précise (la tolérance d'alignement étant de l'ordre de 2 μm) avant d'être solidarisée avec elle.

Cette solidarisation peut être réalisée au moyen de micro piliers de cuivre, l'interstice entre la lentille et la puce photonique étant comblé par une couche de remplissage en un matériau polymère. La couche de remplissage se retrouve sur le chemin optique du faisceau lumineux entre le réseau de couplage surface et la lentille, et génère des pertes supplémentaires.

Pour des faisceaux de taille de mode élargie (ici à 100μm), les pertes augmentent significativement avec un désalignement angulaire entre l'axe du faisceau de l'ensemble 'réseau + première lentille' et l'axe du faisceau de l'ensemble 'fibre + deuxième lentille' (écart angulaire entre les axes des faisceaux des 2 ensembles). Un angle vertical (perpendiculaire aux faces de la puce F1 et F2) pour le faisceau à l'entrée/ sortie de la puce permettrait de réduire considérablement le désalignement angulaire et donc les pertes optiques.

Enfin la bande spectrale d'un faisceau lumineux en entrée ou en sortie d'un tel système puce photonique avec réseau de couplage surfacique/ lentille est d'environ 30nm, ce qui ne permet pas d'implémenter par exemple cette solution avec un multiplexage sur une bande de 80nm de 4 longueurs d'onde de type CWDM.

En photonique intégrée III-V, une source de lumière est directement constituée sur le substrat, dans une couche de guidage en matériau III-V. La couche de guidage peut comprendre des guides d'onde, des composants passifs tels que des multiplexeurs/ démultiplexeurs en longueurs d'onde, et des composants actifs tels que des modulateurs. La lumière peut être extraite de la puce photonique III-V par la tranche, en sortie du guide d'onde, ou par la face arrière de la puce en venant facetter obliquement le guide d'onde, le facettage du guide jouant le rôle de miroir avec renvoi d'angle. Un guide doté d'une facette inclinée constitue ainsi un deuxième type de coupleur vertical. Ce type de coupleur vertical peut être associé à une lentille fabriquée en face arrière de la puce photonique, comme décrit par K. Adachi et al. dans "Emission Beam Engineering of 1.3-μm High-power DFB Laser Using Monolithically-integrated Mirror and Lens for Silicon Photonics », ECOC 2016.

Cette lentille permet de collimater le faisceau après réflexion sur la facette inclinée, et d'élargir la taille de mode du faisceau à 10μm environ (l'épaisseur du substrat InP est d'environ 100μm). Cette lentille présente une surface courbée dont l'épaisseur varie continûment. Le profil de cette surface est ainsi qualifié d'analogique. La fabrication d'un tel profil analogique par gravure exploite une technique de lithographie par fluage de résine (la résine ne peut alors avoir une forme que symétrique) ou de lithographie dite « Gray tone » qui présente l'inconvénient d'être difficile à calibrer pour obtenir les formes analogiques souhaitées.

Avec une telle solution, pour obtenir un angle de couplage perpendiculaire à la face arrière de la puce, il est obligatoire d'incliner la facette avec un angle d'exactement 45°. Ceci est difficile à réaliser, notamment si l'on a recours à des gravures anisotropiques utilisant les plans cristallins des cristaux Silicium ou InP.

Par ailleurs, pour obtenir un angle de couplage qui corresponde à celui d'un réseau de couplage surfacique disposé sur une puce photonique silicium agencée en regard de la puce photonique III-V pour réceptionner le faisceau laser, Adachi et al. propose la combinaison d'un facettage du guide d'onde à un angle supérieur à 45° et d'un déplacement de la lentille qui réceptionne le faisceau réfléchi de sorte que le centre de la lentille soit décalée du centre du faisceau. En déplaçant ainsi la lentille, un angle de couplage non nul peut ainsi être obtenu mais la focalisation est partiellement perdue comme en témoignent des diagrammes de rayonnement en champ lointain.

Dans le brevet US 8,515,217, il a été proposé de positionner une lentille en face arrière d'un substrat, en regard d'un guide d'onde se terminant par une facette inclinée recouverte d'un miroir (coupleur vertical de type guide d'onde facetté), et orientant le faisceau vers la face arrière de la puce. Les lentilles utilisées sont des lentilles analogiques dites de Fresnel. Une lentille de Fresnel remplace la surface courbée d'une lentille conventionnelle par une série d'anneaux concentriques de sections prismatiques différentes d'un anneau à l'autre. L'épaisseur d'une lentille de Fresnel est donc diminuée par rapport à une lentille conventionnelle, mais sa fabrication reste difficile. Elle nécessite une structuration analogique en dents de scie, permettant de définir des crêtes d'inclinaisons variables, généralement réalisée par la technique de lithographie « Gray tone ». Une telle lentille de Fresnel reste par ailleurs sensible aux réflexions de Fresnel. Enfin, une telle lentille est sensible à la polarisation de la lumière du fait des anneaux. En effet, le champ électrique de l'onde optique peut prendre n'importe quelle orientation dans le plan de la puce et les indices vus par l'onde, à l'échelle de la longueur d'onde, diffèrent suivant l'orientation du champ électrique.

**EXPOSÉ DE L'INVENTION**

L'invention a pour objectif de doter une puce photonique de moyens aptes à élargir et collimater un faisceau optique en sortie de la puce photonique (et réciproquement à adapter la taille de mode d'un faisceau optique en entrée de la puce photonique à celle d'une structure de couplage vertical de la puce photonique, et à focaliser le faisceau sur la structure de couplage vertical), ce faisceau étant potentiellement redressé (ou dévié) par rapport à son axe avant traversée desdits moyens, et potentiellement à bande spectrale élargie.

Elle propose pour ce faire une puce photonique comprenant une couche de guidage de la lumière supportée par un substrat, une face avant du côté de la couche de guidage de la lumière, une face arrière du côté du substrat, une lentille intégrée au niveau de la face arrière et, dans la couche de guidage de la lumière, un coupleur vertical et une structure de guidage de la lumière optiquement couplée au coupleur vertical, le coupleur vertical étant configuré pour recevoir/transférer une lumière depuis/vers la structure de guidage de la lumière et former/recevoir un faisceau de lumière en direction de/depuis la lentille. La lentille comprend une pluralité de tranchées pratiquées dans la face arrière, les tranchées délimitent un réseau bidimensionnel de plots et chaque plot présente, dans une direction orthogonale aux faces avant et arrière, une épaisseur invariable.

Certains aspects préférés mais non limitatifs de cette puce sont les suivants :

- le substrat présente une épaisseur Th, le faisceau de lumière fait un angle $\Theta 2$ avec un axe perpendiculaire aux faces avant et arrière et la lentille présente un centre et un axe médian orthogonal aux face avant et arrière passant par son centre, l'axe médian de la lentille et un axe orthogonal aux face avant at arrière passant par le centre du coupleur vertical étant décalés d'une distance Th*tan $\Theta 2$ ;
- le substrat présente un indice effectif n10, la lumière présente une lumière de longueur d'onde $\lambda$, le faisceau de lumière formé/reçu par le coupleur vertical présente une taille de mode Do=2.wo et les plots forment un réseau bidimensionnel de dimension caractéristique supérieure ou égale à Th x $2\lambda$ /($\pi$. wo x cos $\Theta 2$. n10) ;

- le réseau bidimensionnel comprend des cellules élémentaires se répétant périodiquement, chaque cellule élémentaire comprenant un plot et les dimensions des plots étant modulées d'une cellule élémentaire à l'autre ;
- la lentille présente une symétrie circulaire autour de son axe médian, les plots équidistants de l'axe médian étant de taille identique ;
- la lentille présente une symétrie circulaire autour de l'axe orthogonal aux faces avant at arrière passant par le centre du coupleur vertical, les plots équidistants dudit axe orthogonal étant de taille identique ;
- la lentille présente une symétrie circulaire autour d'un axe de symétrie orthogonal aux faces avant at arrière, l'axe de symétrie passant dans le plan de la lentille en un point situé entre le centre de la lentille et la projection du centre du coupleur vertical, les plots équidistants de l'axe de symétrie étant de taille identique ;
- les plots sont parallélépipédiques ou cylindriques ;
- la lentille est une lentille de Fresnel ;
- elle comprend en outre un miroir agencée en face arrière pour réfléchir la lumière depuis/vers la lentille ;
- le coupleur vertical est un guide d'ondes à facette inclinée ou un réseau de couplage surfacique ;
- le réseau de couplage surfacique est conformé pour recevoir/transférer de la lumière depuis/vers la structure de guidage de la lumière et former/recevoir un faisceau de lumière de taille de mode inférieure à 12$\mu$m, de préférence inférieure à 6 $\mu$m, en direction de/depuis la lentille.

L'invention porte également sur une puce photonique comprenant un composant photonique actif, des interconnexions électriques au composant photonique actif et une puce électronique rapportée sur la face arrière de la puce photonique et raccordée à des interconnexions électriques. Elle concerne également une puce photonique à laser intégré hybride optiquement couplée à une autre puce photonique conforme à l'invention.

**BRÈVE DESCRIPTION DES DESSINS**

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- la figure 1, déjà discutée précédemment, est une coupe schématique d'une puce photonique intégrant une structure laser hybride à semi-conducteurs III-V sur silicium ;
- les figures 2 et 3 sont des coupes schématiques de puces photoniques conformes à l'invention disposant d'une structure de collimation intégrée en face arrière et d'un coupleur vertical dirigeant la lumière en direction de la structure de collimation en face arrière ;

- les figures 4a, 4b et 4c sont des schémas de lentilles réalisées par gravure selon des modes de gravure appelés respectivement numérique (figure 4a) et analogique (figures 4b et 4c) dans l'exposé de l'invention ;
- les figures 5a et 5b illustrent différentes variantes de réalisation d'une structure de collimation pouvant être intégrée dans une puce selon l'invention ;
- les figures 6a et 6b illustrent le dimensionnement d'une structure de collimation pouvant être intégrée dans une puce selon l'invention et qui n'introduit aucune déviation du faisceau à la traversée de la structure de collimation ;
- les figures 7a et 7b illustrent le dimensionnement d'une autre structure de collimation pouvant être intégrée dans une puce selon l'invention, celle-ci introduisant une déviation du faisceau à la traversée de la structure de collimation ;
- la figure 8 illustre le couplage d'une puce photonique conforme à la figure 2 à une autre puce photonique conforme à la figure 3;
- la figure 9 illustre une variante de réalisation d'une puce photonique conforme à la figure 3 ;
- les figures 10a et 10b illustrent deux variantes de réalisation d'une puce photonique conforme à la figure 2, et la figure 10c illustre une variante de réalisation d'une puce photonique conforme à la figure 3 ;
- les figures 11a-11g illustrent un exemple de réalisation de la puce photonique de la figure 5 ;
- les figures 12a, 12b et 12c fournissent des exemples de dimensionnement d'une lentille numérique de type Fresnel, la lentille de la figure 12a ne redressant pas le faisceau lumineux en sortie de puce et les lentilles des figures 12b et 12c redressant le faisceau lumineux en sortie de puce ;
- les figures 13a et 13b illustrent l'agencement de la lentille vis-à-vis du coupleur vertical lorsque le faisceau en sortie de celui-ci fait un angle Θ2 non nul avec la verticale, et rapporte une vue de dessus de la structure de collimation respectivement sans et avec redressement du faisceau ;
- les figures 14a et 14b illustrent l'agencement de la lentille vis-à-vis du coupleur vertical lorsque le faisceau en sortie de celui-ci est à la verticale, respectivement sans et avec modification de l'angle du faisceau ;
- la figure 15 illustre la solution préconisée par Adachi et al. pour modifier l'angle d'un faisceau en incidence normale sur la lentille.

## EXPOSÉ DÉTAILLÉ DE MODES DE RÉALISATION PARTICULIERS

L'invention porte sur une puce photonique pouvant fournir (respectivement recevoir) en sortie (respectivement en entrée) de la puce photonique un faisceau optique collimaté, de taille de mode préférentiellement élargie.

La puce comporte un substrat, par exemple un substrat en silicium, en InP ou en AsGa. En référence aux figures 2 et 3 décrivant l'exemple d'une puce en technologie silicium, la puce photonique 1, 2 comprend une couche de guidage de la lumière 12 supportée par un substrat 10 et recouverte par une couche d'oxyde de silicium 13 optionnelle (servant par exemple d'interface de collage entre le substrat et un empilement III-V laser). La couche de guidage de la lumière peut comprendre une sous-couche en silicium cristallin (le silicium d'un substrat SOI), ainsi qu'une sous-couche en silicium amorphe et/ou une sous-couche en nitrure de silicium. Une couche en matériau diélectrique 11, est intercalée entre la couche de guidage de la lumière 12 et le substrat 10. Cette couche 11 peut également comprendre des niveaux métalliques d'interconnexion avec les composants optiques actif de la couche 12.

La puce photonique 1, 2 peut intégrer un ou plusieurs composants optiques CO, actifs ou passifs. La couche de guidage de la lumière 12 comprend une structure de guidage de la lumière 121 en silicium optiquement couplée, d'une part, au(x) composant(s) CO et, d'autre part, à un coupleur vertical 122 dans la couche de guidage de la lumière. CO peut être un ensemble de composants : par exemple un laser + un modulateur, couplé à 121, puis 122. La puce peut comporter une pluralité de CO, 121, 122, 15.

Le composant optique CO peut être un photodétecteur en matériau germanium logé dans la couche 12. Dans ce cas la puce photonique peut être un récepteur destiné à recevoir un faisceau optique dont on veut détecter l'intensité sur le photodétecteur CO.

Le composant optique CO peut également être un laser hybride à semi-conducteurs III-V sur silicium qui comprend une structure à gain en matériaux III-V sur la couche d'interface 13, ou directement en contact avec la couche de guidage de la lumière 12. La structure à gain comprend par exemple un empilement de couches de matériaux III-V et deux électrodes pour la prise de contacts électriques sur la structure à gain. Le laser LA peut être encapsulé dans une seconde couche d'encapsulation 14, par exemple en oxyde de silicium, en nitrure de silicium ou dans un mélange d'oxyde de silicium et de nitrure de silicium, ou dans un polymère de type BCB. La puce photonique présente ainsi une face avant F1 du côté de la seconde couche d'encapsulation 14 et une face arrière F2 du côté du substrat 10.

Dans le cadre de l'invention, le coupleur vertical 122 est configuré pour recevoir la lumière depuis la structure de guidage de la lumière 121 et former à partir de celle-ci un faisceau de lumière dirigé vers la face arrière F2 de la puce photonique. Cette configuration du coupleur vertical 122 permet ainsi à la lumière de traverser toute l'épaisseur du substrat 10. Le coupleur vertical 122 est par exemple un réseau de couplage surfacique ou un guide d'onde à facette inclinée. Pour un réseau de couplage surfacique, la taille de mode Do est de $9.2\,\mu m$, adaptée à la taille de mode d'une fibre monomode. Pour un guide d'onde silicium à facette inclinée, la taille de mode Do est typiquement de $3\,\mu m$.

La puce photonique 1, 2 comporte en outre une structure de collimation de type lentille 15 intégrée au niveau de la face arrière F2. Le coupleur vertical 122 est configuré pour diriger le faisceau de lumière vers la structure de collimation 15 intégrée au niveau de la face arrière F2. La structure de collimation 15 est configurée pour collimater un faisceau de lumière incident sur ladite structure depuis le coupleur vertical 122, le point focal de la structure de collimation 15 correspondant au centre du coupleur vertical 122, et élargir la taille de mode de ce faisceau à une taille de mode élargie Di après la traversée dans le substrat.

Dans une variante de réalisation préférentielle de l'invention permettant d'obtenir une puce photonique avec entrées/ sorties de faisceaux lumineux collimatés non seulement à taille de mode élargie mais également à bande spectrale élargie, le coupleur vertical 122 est un réseau de couplage surfacique conçu pour être adapté à une taille de mode (par exemple de $3\mu m$) réduite par rapport à celle d'une fibre monomode (typiquement $9,2\mu m$). Dans cette variante, le réseau de couplage surfacique est ainsi conformé pour recevoir/transférer de la lumière guidée depuis/vers la structure de guidage de la lumière 121 et former/recevoir un faisceau de lumière de taille de mode inférieure à 6 $\mu m$ en direction de/depuis la structure de collimation.

On retiendra qu'une telle conception du réseau de couplage n'est pas exclusive de la puce selon l'invention à structure de collimation intégrée en face arrière, mais peut trouver application dans toute puce photonique où un tel réseau reçoit/transfère de la lumière guidée depuis/vers un guide d'onde pour former/recevoir un faisceau de lumière collimaté à taille de mode réduite, égale ou élargie , notamment dans une puce photonique à structure de collimation intégrée ou assemblée en face avant ou arrière, et plus particulièrement dans une puce photonique intégrant un ou plusieurs composants tels que des lasers hybrides sur silicium, des modulateurs, des photodétecteurs, ou une puce réalisant un multiplexage/démultiplexage en longueurs d'onde pour laquelle une large bande spectrale est nécessaire.

L'équation suivante illustre la dépendance de l'angle $\theta$ d'émission de la lumière par un réseau de couplage

$$\frac{1}{\lambda}\left[-n_{11}.sin\theta + n_{eff}\right] = \frac{1}{\Lambda'}$$

surfacique avec la longueur d'onde $\lambda$ de la lumière : où $n_{11}$ est l'indice de la couche diélectrique 11, $n_{eff}$ est l'indice effectif de la couche 12 de guidage de la lumière et $\Lambda$ est le pas du réseau. En dérivant

$$\frac{d\theta}{d\lambda} = \frac{1}{\Lambda}\frac{1}{n_{11}}.$$

cette équation par rapport à $\lambda$, on obtient l'équation suivante :

En diminuant la taille de mode Do=$2*w_o$ du faisceau en entrée/sortie du réseau de couplage surfacique et en direction de/depuis la structure de collimation, on augmente l'ouverture numérique NA, et donc l'angle $\Phi$ du faisceau

$$w_o = \lambda.\frac{\pi}{NA} \quad avec \quad NA = n_{11}.sin\left(\frac{\Phi}{2}\right).$$

de lumière en sortie du réseau: Un angle $\Phi$ élargi contient plus de longueurs d'onde en condition de phase. En venant disposer une lentille adaptée en regard de ce réseau, la bande spectrale du système « réseau de couplage surfacique / lentille » est considérablement élargie. Prenant l'exemple d'un réseau à taille de mode réduite à Do= $3\mu m$, la bande spectrale est ainsi élargie à environ 100nm, là où elle n'est que de 32nm pour un réseau à taille de mode standard de $9,2\mu m$.

Un réseau de couplage surfacique à taille de mode réduite se différencie physiquement d'un réseau standard en ce qu'il est moins long (dans la direction de propagation de la lumière), moins large (orthogonalement à la direction de propagation de la lumière), et en ce que la profondeur de gravure des lignes du réseau est plus importante, comme exemplifié ci-dessous à partir d'un calcul approximatif.

| Taille de mode | Longueur du réseau | Largeur du réseau | Gravure du réseau : Epaisseur de Si non gravée/ épaisseur de Si dans les tranchées du réseau de couplage surfacique |
|---|---|---|---|
| Standard : 2.wo= $9,2\mu m$ | ~ 30 $\mu m$ | ~10 $\mu m$ | 300nm/ 150nm |
| Réduite: 2.wo =3 $\mu m$ | ~ 10$\mu m$ | ~3 $\mu m$ | 300nm/ 50 nm ou 300/0nm |

Le réseau de couplage surfacique peut être réalisé suivant d'autres variantes, mais il se caractérise physiquement par une taille de mode du faisceau à sa sortie réduite (Do <$6\mu m$) par rapport au réseau de couplage surfacique connu et utilisé dans le domaine (Do=$9.2\mu m$).

En regard de ce réseau, le faisceau lumineux traversant un substrat 10 en Silicium de $775\mu m$ d'épaisseur est très divergent, mais en l'associant à la lentille 15, il peut être collimaté, et présenter une taille de mode de $120\mu m$ (au lieu de $40\mu m$ en utilisant un réseau de couplage standard). La tolérance d'alignement de cette lentille par rapport à un tel réseau de couplage surfacique est réduite, passant de +/-$2\mu m$ pour un réseau de couplage surfacique de taille de mode standard de 9,2$\mu$m à +/-0.5$\mu$m pour un réseau de couplage surfacique de taille de mode 3$\mu$m. Mais une telle tolérance d'alignement réduite reste parfaitement atteignable puisque l'alignement est réalisé en lithographie.

La puce photonique à structure de collimation intégrée en face arrière peut être destinée à être couplée optiquement à un autre dispositif extérieur agencé en regard de la puce, par exemple une puce photonique, un dispositif comprenant une ou plusieurs fibres optiques, ce dispositif comportant au moins une entrée et/ou une sortie optique de taille de mode équivalente à la sortie de la structure de collimation 15 intégrée à la puce 1, 2. Dans le cas d'un couplage avec des fibres monomodes, il s'agit par exemple pour le dispositif extérieur de connecteurs dits « expanded beam » permettant de passer d'une taille de mode de 9.2$\mu$m (celle des fibres monomodes) à une taille de mode élargie à 50-500 $\mu$m.

La puce photonique à structure de collimation intégrée en face arrière peut également être utilisée pour émettre dans un milieu lorsqu'elle intègre un laser, par exemple pour des applications LIDAR (« Light Détection and Ranging »), ou recevoir dans un milieu une lumière non guidée. Dans ce dernier cas, le coupleur 122 est couplé au guide d'onde 121, lui-même couplé à un photodétecteur accommodé dans la couche 12.

On observe des pertes de Fresnel lors de la traversée de l'interface entre la couche 11 et le substrat 10 : elles sont de 0,8 dB avec une couche 11 en SiO$_2$ et un substrat 10 en silicium. Afin de limiter ces pertes, dans une variante possible de l'invention, une couche antireflet (par exemple une couche de nitrure de silicium, d'épaisseur $\lambda$/4 où $\lambda$ correspond à la longueur d'onde du faisceau lumineux) est agencée entre la couche 11 et le substrat 10. Il est également possible d'adopter pour matériau de la couche 11 non pas du SiO$_2$ mais un nitrure de silicium ou un empilement d'une sous-couche de SiO2 et d'une sous-couche de nitrure de silicium. Les pertes lors de la traversée de l'interface entre la couche 11 et le substrat 10 sont ainsi inférieures à 0.5dB à la longueur d'onde 1.31$\mu$m.

Dans un premier mode de réalisation représenté sur la figure 2, la structure de collimation est une lentille 15 formée sur la face arrière de la puce photonique 1, la lentille 15 venant collimater le faisceau de lumière la traversant. La lentille 15 est plus particulièrement une lentille dite numérique qui prend la forme d'un réseau de tranchées pratiquées en face arrière, les tranchées délimitant un ensemble de motifs et chaque motif présentant, dans une direction orthogonale aux faces avant et arrière, une épaisseur invariable

Dans un second mode de réalisation représenté sur la figure 3, la structure de collimation est une structure réfléchissante structurée de manière à collimater le faisceau de lumière s'y réfléchissant. Une telle structure réfléchissante est une lentille réfléchissante réalisée en formant une lentille numérique 15 comme dans le premier mode de réalisation et en recouvrant celle-ci d'une couche métallique 16, par exemple une couche d'or, d'argent ou d'aluminium. La couche métallique 16 peut être localisée ou couvrir l'intégralité de la face arrière.

La lentille réfléchissante 15, 16 de la figure 3 permet de renvoyer le faisceau collimaté vers la face avant F1. Cette configuration est particulièrement intéressante dans le cas où l'on souhaite reporter une puce électronique sur la face arrière F2 de la puce photonique. Dans ce cas, la face arrière F2 de la puce photonique n'est pas accessible, et la lentille réfléchissante 15, 16 permet alors de récupérer le faisceau collimaté du côté de la face avant F1.

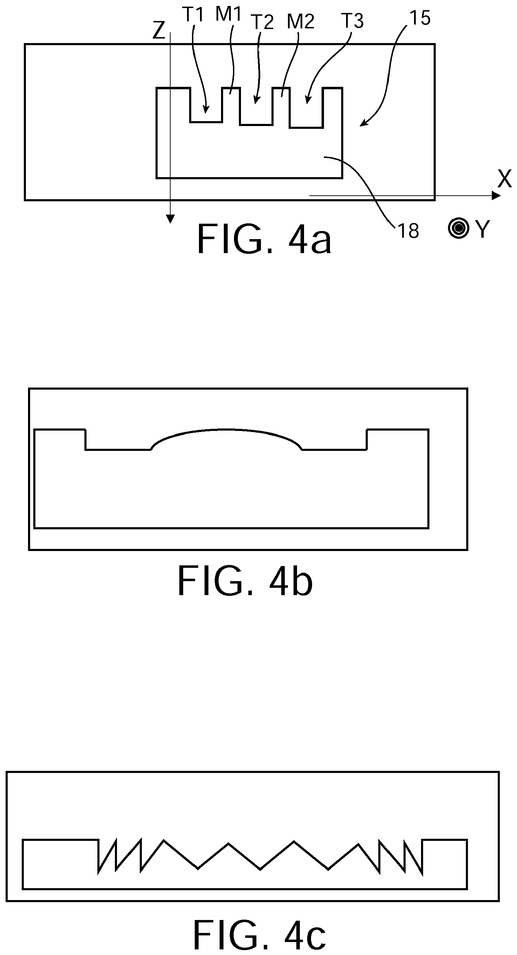

On distingue les lentilles dites numériques utilisées dans l'invention qui peuvent être fabriquées au moyen d'étapes de fabrication (lithographie/gravure) standards donnant lieu à des structurations « numériques » (cf. figure 4a où un 1 numérique correspondant à une gravure d'une tranchée T1, T2, T3 et un 0 numérique correspondant à une absence de gravure venant définir un motif M1, M2 d'épaisseur invariable) des lentilles qui nécessitent une structuration « analogique » pour définir des motifs d'épaisseur variable, par exemple un dioptre sphérique (figure 4b) ou des crêtes d'inclinaisons variables (figure 4c). Une telle lentille analogique est généralement obtenue par une technique de lithographie par fluage de la résine ou par lithographie dite « Gray tone ».

En référence à la figure 4a, la lentille numérique 15 comprend ainsi une pluralité de tranchées T1, T2, T3 pratiquées sur la face arrière F2 du substrat 10, les tranchées délimitant un ensemble de motifs M1, M2 et chaque motif présentant, dans une direction orthogonale aux faces avant et arrière, une épaisseur invariable. Dans un mode de réalisation privilégié, les motifs ont tous la même épaisseur. L'invention s'étend toutefois à des motifs présentant des épaisseurs différentes, et plus particulièrement à des motifs se répartissant en un premier ensemble de motifs présentant une première épaisseur et un deuxième ensemble de motifs présentant une deuxième épaisseur. La première épaisseur peut être supérieure à la deuxième épaisseur, et les motifs du premier ensemble peuvent être des motifs plus larges que les motifs du second ensemble.

L'épaisseur des motifs est typiquement définie par une profondeur de gravure des tranchées. Les motifs sont constitués du matériau du substrat. Alternativement, ou en complément, ils peuvent être constitués du matériau d'une couche supplémentaire rapportée en face arrière du substrat. Cette couche supplémentaire est par exemple en silicium amorphe déposé ou en silicium cristallin, ou en tout autre matériau à fort indice par contraste avec celui de l'air ou du matériau venant remplir les tranchées.

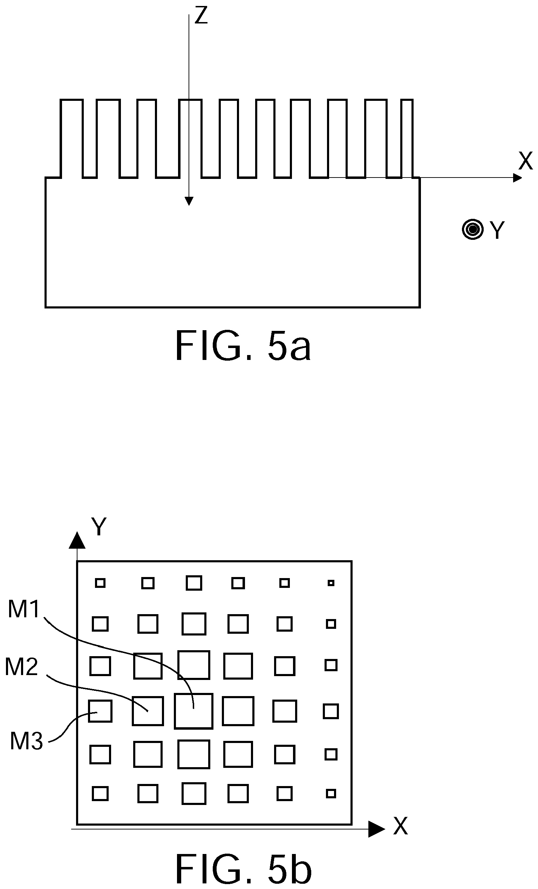

En référence à la figure 5a, chaque tranchée présente une profondeur selon la direction orthogonale aux faces avant et arrière (direction z). Les tranchées séparent des motifs d'épaisseur invariable qui forment un réseau bidimensionnel, par exemple un réseau carré ou circulaire. Ce réseau présente une dimension caractéristique (côté dans le cas d'un réseau carré, diamètre dans le cas d'un réseau circulaire) supérieure ou égale à Th x 2$\lambda$/($\pi$. wo x cos $\Theta$2. n10).

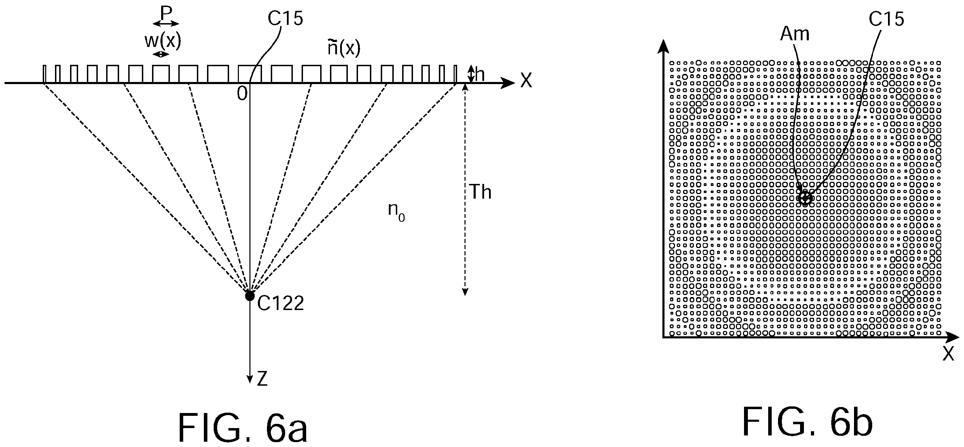

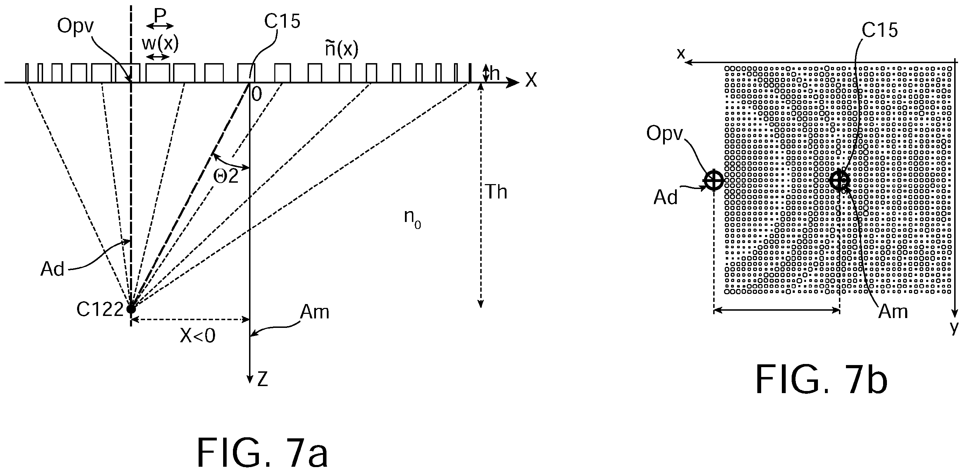

Comme représenté en figures 5b, 6b et 7b, les motifs peuvent former un réseau matriciel de plots de section (dans le plan (xy)) carrée ou rectangulaire (figure 5b), ou circulaire (figures 6b et 7b). Les motifs peuvent notamment être disposés en symétrie circulaire autour d'un axe de symétrie non nécessairement confondu avec l'axe médian de la lentille passant en son centre. Ces dernières formes, contrairement à des anneaux, permettent une insensibilité à la polarisation. En effet le champ électrique de l'onde optique peut prendre n'importe quelle orientation dans le plan (xy) et les indices vus par l'onde, à l'échelle de la longueur d'onde, sont identiques quelle que soit l'orientation du champ électrique.

L'indice de réfraction des tranchées T1-T4 est inférieur à l'indice de réfraction des motifs. De cette manière, la lentille forme une structure à pseudo-gradient d'indice de réfraction à même de collimater vers l'extérieur un front d'onde courbe incident depuis le coupleur vertical 122 (et vice-versa de générer un déphasage courbe d'un front d'onde plan incident depuis l'extérieur). Plus particulièrement, les motifs sont formés dans un matériau coeur d'indice de réfraction $nc$, et les tranchées sont laissées à l'air ou remplies d'un matériau de remplissage d'indice de réfraction $nr$ inférieur à l'indice de réfraction $nc$ du matériau coeur, par exemple en $SiO_2$. La différence entre les indices de réfraction du coeur et des tranchées est de préférence au moins égal à 0,2.

Par pseudo-gradient d'indice, on entend dans le cadre de l'invention que la lentille numérique ne comporte pas un véritable profil de variation d'indice de réfraction du matériau coeur comme c'est le cas des structures dite « graded-index », mais qu'elle en présente les mêmes propriétés. Ainsi lors de son passage dans la lentille numérique, la lumière rencontre l'équivalent d'une lentille analogique.

Les tranchées peuvent être agencées périodiquement, la largeur des tranchées séparant deux motifs contigus étant modulée d'une tranchée à l'autre. De cette manière, le facteur de remplissage en matériau de la couche coeur (qui définit l'indice de réfraction local) évolue le long de la lentille.

Prenant l'exemple d'un réseau matriciel de plots cylindriques (cf. figures 6b et 7b), ce réseau comprend un ensemble de cellules élémentaires carrées de même taille, on retrouve un plot par cellule et la surface des plots est modulée d'une cellule à l'autre. Le facteur de remplissage peut alors s'exprimer comme le rapport entre la surface d'un plot et la surface de la cellule élémentaire. Avec une cellule élémentaire carrée de côté 500nm, le diamètre de plots peut évoluer entre 20nm et 480nm = 500 -20nm.

Dans un mode de réalisation qui sera détaillé par la suite, la lentille 15 est configurée pour extraire la lumière la traversant depuis le coupleur vertical 122 selon la normale à la face arrière F2 de la puce.

La figure 6a illustre le dimensionnement d'une structure de collimation en regard d'un coupleur vertical pour lequel l'angle d'entrée/sortie du faisceau optique, $\Theta2 = 0$ (le centre du coupleur vertical représenté par le point C122 est alors sur l'axe perpendiculaire au plan (x,y) et passant par le centre C15 de la structure de collimation (axe appelé axe médian Am de la structure de collimation). La figure 6b rapporte une structure de collimation de symétrie circulaire par rapport à son axe médian, c'est-à-dire que dans le plan x,y, les motifs du réseau bidimensionnel qui sont équidistants de l'axe médian ont une surface identique (s'agissant ici de plots, ils ont un diamètre identique).

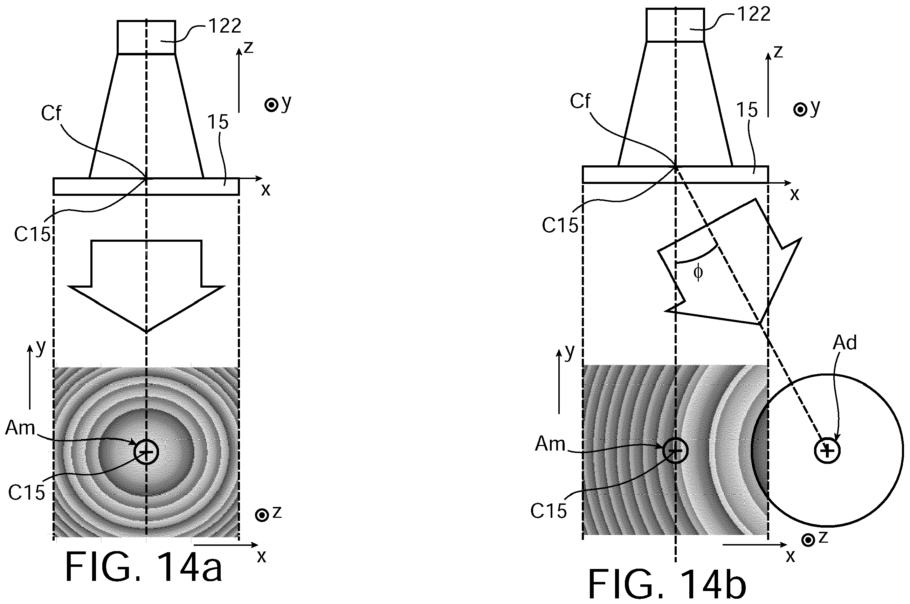

Les figures 6a-6b illustrent plus particulièrement le dimensionnement d'une structure de collimation ne déviant pas le faisceau en incidence verticale sur cette structure, comme le montrent plus loin les équations décrivant la géométrie des motifs M1, M2, M3. Cette configuration est également représentée en figure 14a.

La figure 7a illustre le dimensionnement d'une structure de collimation en regard d'un coupleur vertical 122 pour lequel l'angle d'entrée/sortie du faisceau optique, $\Theta2 \neq 0$ (la projection orthogonale, Opv, du centre du coupleur vertical C122 sur le plan x,y de la structure de collimation est alors décalé de $X \sim Th \times \tan \Theta2$ par rapport au centre C15 de la structure de collimation (avec Th l'épaisseur du substrat 10). La figure 7b rapporte une structure de collimation dont l'axe de symétrie circulaire Ad est décalé de X par rapport à l'axe médian Am de la lentille. L'axe Ad est perpendiculaire au plan x,y de la lentille et passe par Opv. Vue de dessus, la lentille apparait asymétrique.

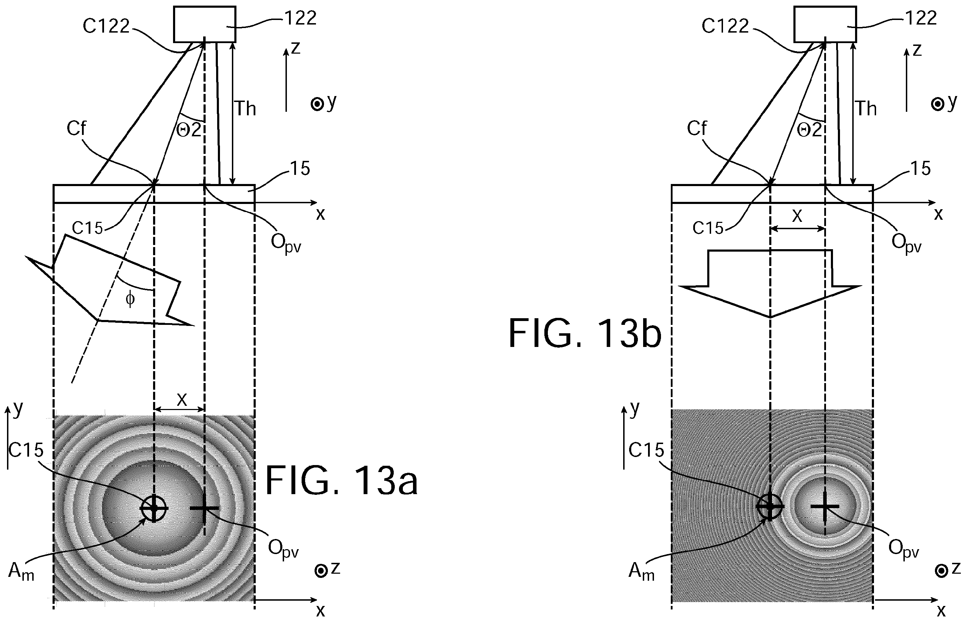

Les figures 7a-7b illustrent plus particulièrement le dimensionnement d'une structure de collimation permettant le redressement du faisceau après la traversée de la structure de collimation ($\phi=0$), comme le montrent plus loin les équations décrivant la géométrie des motifs M1, M2, M3 Cette configuration est également représentée en figure 13b.

Il est bien sûr possible d'extraire un faisceau collimaté non vertical ($\Theta2 \neq 0$) sans le redresser : une structure de collimation de symétrie circulaire par rapport à son axe médian est alors utilisé, son centre C15 étant décalé de $X = Th \times \tan \Theta2$ par rapport à la projection orthogonale, Opv, du centre du coupleur vertical C122 sur le plan x,y de la structure de collimation, comme représenté en figure 13a. Et comme représenté en figure 14b, la lentille peut être configurée pour conférer, après sa traversée un angle $\phi \neq 0$ à un faisceau incident vertical. Une structure de collimation de symétrie circulaire par rapport à un axe Ad, décalé de son axe médian est alors utilisée. La projection orthogonale, Opv, du centre C122 du coupleur vertical sur le plan x, y de la structure de collimation est confondu avec le centre C15 de la structure de collimation.

On a ainsi représenté sur les figures 13a, 13b, 14a et 14b l'agencement de la lentille 15 vis-à-vis du coupleur vertical 122. La lentille 15 présente un axe médian Am perpendiculaire au plan x,y et passant par son centre C15. Le centre C122 du coupleur vertical est au point focal de la lentille. Sa projection orthogonale, Opv, sur le plan x, y de la structure de collimation est distant du centre C15 d'un décalage X pouvant être approximé à $Th \times \tan \Theta2$. Le centre du

faisceau incident sur le plan x,y de la structure de collimation depuis le coupleur vertical est désigné par Cf. Le centre Cf du faisceau incident est confondu avec le centre C15 de la structure de collimation.

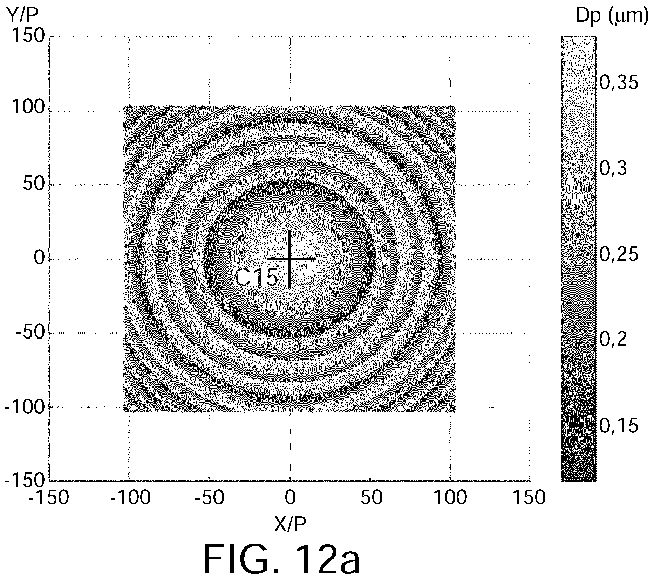

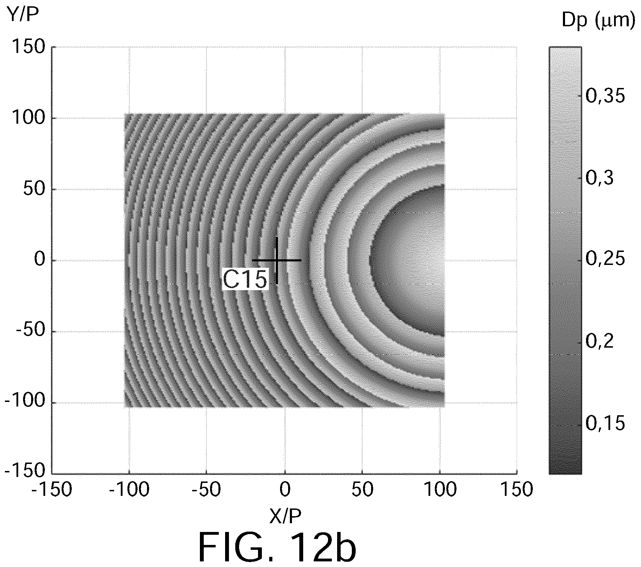

Sur les figures 13a et 13b, le faisceau en sortie du coupleur vertical n'est pas vertical ($\Theta2 \neq 0°$), et la lentille réalise ou non un redressement du faisceau. En l'absence de redressement (figure 13a), la structure de collimation présente une symétrie circulaire autour d'un axe de symétrie confondu avec l'axe médian Am de la lentille (voir également la figure 12a) En présence de redressement, c'est-à-dire quand l'angle $\phi$ après la traversée de la structure 15 est nul (figure 13b), la structure de collimation présente une symétrie circulaire autour d'un axe de symétrie Ad distant de l'axe médian de la lentille, ledit axe de symétrie étant perpendiculaire au plan x, y de la lentille et passant par le point focal C122 (voir également la figure 12b). L'intersection de cet axe de symétrie Ad avec le plan de la lentille est désigné par $O_{pv}$. Bien entendu, toute variation d'angle intermédiaire entre l'absence et la présence d'un redressement peut être réalisée en décalant le centre de symétrie circulaire des plots de C15 vers $O_{pv}$.

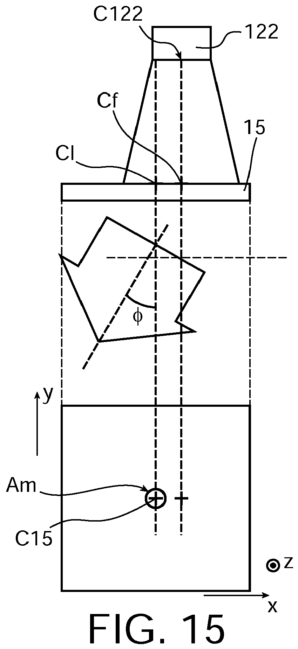

Sur les figures 14a et 14b, le faisceau en sortie du coupleur vertical est vertical ($\Theta2 = 0°$), et la lentille réalise ou non un modification de l'angle du faisceau $\phi$ après sa traversée. Sans modification de l'angle du faisceau (figure 14a), la structure de collimation présente une symétrie circulaire autour d'un axe de symétrie confondu avec l'axe médian Am de la lentille. Avec modification de l'angle du faisceau (figure 14b) pour qu'il présente, en sortie de la lentille 15, un angle $\phi$ non nul avec la verticale, la structure de collimation présente une symétrie circulaire autour d'un axe de symétrie Ad, perpendiculaire au plan (x,y) et distant d'une valeur non nulle de l'axe médian de la lentille. Le centre du faisceau, Cf, sur le plan x,y de la lentille reste confondu avec le centre C15 de la lentille. A fin de comparaison, on a représenté sur la figure 15, la solution préconisée par Adachi et al. pour modifier l'angle d'un faisceau en incidence normale et qui consiste à décaler le centre Cl de la lentille par rapport au centre Cf du faisceau incident sur le plan (x,y) de la lentille. Dans cette solution, l'axe de symétrie circulaire de la lentille est confondu avec son axe médian Am.

La structure de collimation est configurée pour générer un déphasage courbe d'un front d'onde plan incident depuis l'extérieur de la puce, déphasage tel que les rayons sont, après traversée de la structure de collimation, tous en phase au point focal de la structure de la collimation, le point focal étant le coupleur vertical (assimilé à un point au regard de l'épaisseur Th du substrat 10). Réciproquement, la structure de collimation vient générer un front d'onde plan à partir d'un faisceau divergent issu du coupleur vertical. Les figures 6a et 7a sont des vues des motifs selon une coupe parallèle au plan (xz) tandis que les figures 6b et 7b sont des vues des motifs selon une coupe parallèle au plan (xy).

Le diamètre des plots est calculé suivant la méthodologie présentée ci-dessous. Les motifs sont considérés comme cylindriques, en matériau silicium d'indice nsi, d'épaisseur h, de diamètre Wsi. Ces plots sont considérés être encapsulés dans du SiO2 d'indice $n_{SiO2}$.

Dans l'exemple de la figure 6a où le point focal est sur l'axe médian Am = z de la structure de collimation, les tranchées étant remplies par du $SiO_2$, cette configuration se traduit par :

$$\frac{2\pi}{\lambda}\tilde{n}(x,y)h + \frac{2\pi}{\lambda}n_0\sqrt{F^2+x^2+y^2} = \frac{2\pi}{\lambda}\tilde{n}(0)h + \frac{2\pi}{\lambda}n_0F$$

Soit $\tilde{n}(x,y) = \tilde{n}(0) - \dfrac{n_0\sqrt{F^2+x^2+y^2}-n_0F}{h}$, où $\tilde{n}(x,y)$ représente l'indice moyen de la lentille à la position (x,y), liée au facteur de remplissage de silicium, h l'épaisseur des motifs de silicium, F correspond à l'épaisseur Th du substrat (par exemple 775$\mu$m pour un substrat SOI de 300mm de diamètre), $\lambda$ la longueur d'onde centrale du faisceau lumineux et $n_0$ l'indice du matériau composant le substrat 10.

L'indice moyen $\tilde{n}(x)$ est lié au facteur de remplissage de silicium $f_{Si}(x)$, par :

$$\tilde{n}(x) = \sqrt{f_{Si}(x) * n_{Si}^2 + (1 - f_{Si}(x)) * n_{SiO_2}^2}$$

On en déduit l'évolution du facteur de remplissage de silicium :

$$f_{Si}(x) = \frac{\left(\sqrt{f_{Si}(0) * n_{Si}^2 + (1 - f_{Si}(0)) * n_{SiO_2}^2} - \dfrac{n_0\sqrt{F^2+x^2+y^2}-n_0F}{h}\right)^2 - n_{SiO_2}^2}{(n_{Si}^2 - n_{SiO_2}^2)}$$

Si on considère que la structure de collimation s'apparente à un réseau pseudopériodique, de pseudopériode P (position des centres des plots) et dont le diamètre variable des plots $W_{Si}(x, y)$, les motifs présentent un diamètre défini selon une série $W_{Si}(n, p)$, vérifiant, pour $n \in [-N ; N]$ et $p \in [-N ; N]$ :

$$W_{Si}(n,p) = 2P. \sqrt{\frac{\left(\sqrt{\frac{\pi W_{Si}(0)^2 * n_{Si}^2 + (4P^2 - \pi W_{Si}(0)^2) * n_{SiO_2}^2}{4P^2}} - n_0 \frac{\sqrt{F^2 + (nP)^2 + (pP)^2} - F}{h}\right)^2 - n_{SiO_2}^2}{\pi (n_{Si}^2 - n_{SiO_2}^2)}} \qquad (1)$$

Dans l'exemple de la figure 7a, le point focal de la structure de collimation est décalé de l'axe médian z de la structure 15 d'une distance X = Th x tan Θ2. La structure de collimation est calculée comme suit:

$$\frac{2\pi}{\lambda} \tilde{n}(x,y)h + \frac{2\pi}{\lambda} n_0 \sqrt{F^2 + (x-X)^2 + y^2} = \frac{2\pi}{\lambda} \tilde{n}(0)h + \frac{2\pi}{\lambda} n_0 \sqrt{F^2 + X^2}$$

$$\tilde{n}(x) = \tilde{n}(0) - n_0 \frac{\sqrt{F^2 + (x-X)^2 + y^2} - \sqrt{F^2 + X^2}}{h}.$$

Soit,

$$\tilde{n}(x) = \sqrt{f_{Si}(x) * n_{Si}^2 + (1 - f_{Si}(x)) * n_{SiO_2}^2}$$

Sachant que :
On en déduit :

$$f_{Si}(x)$$

$$= \frac{\left(\sqrt{f_{Si}(0) * n_{Si}^2 + (1 - f_{Si}(0)) * n_{SiO_2}^2} - n_0 \frac{\sqrt{F^2 + (x-X)^2 + y^2} - \sqrt{F^2 + X^2}}{h}\right)^2 - n_{SiO_2}^2}{(n_{Si}^2 - n_{SiO_2}^2)}$$

Si on considère que la structure de collimation s'apparente à un réseau pseudopériodique, de pseudopériode P (position des centres des plots) et dont le diamètre variable des plots $W_{Si}(x, y)$, les motifs présentent un diamètre défini selon une série $W_{Si}(n, p)$, vérifiant, pour $n \in [-N ; N]$ et $p \in [-N ; N]$ :

$$W_{Si}(n,p) = 2P. \sqrt{\frac{\left(\sqrt{\frac{\pi W_{Si}(0)^2 * n_{Si}^2 + (4P^2 - \pi W_{Si}(0)^2) * n_{SiO_2}^2}{4P^2}} - n_0 \frac{\sqrt{F^2 + (nP-X)^2 + (pP)^2} - \sqrt{F^2 + X^2}}{h}\right)^2 - n_{SiO_2}^2}{\pi (n_{Si}^2 - n_{SiO_2}^2)}} \qquad (2)$$

Pour une structure de collimation sans redressement, c'est le motif central de la structure de collimation qui possède la plus grande largeur, donc l'on peut fixer :

$$W_{Si}(0) = P - cd\_min \qquad \text{Equation (NR),}$$

avec *cd_min* la largeur minimale d'une tranchée techniquement réalisable par gravure. Une telle structure de collimation présente une symétrie circulaire autour de l'axe médian de la lentille Am, défini comme l'axe perpendiculaire à (x,y) et qui passe par le point milieu C15 de la structure de collimation. Ainsi les plots équidistants de l'axe médian ont un diamètre identique (cf. figure 6b). Dans le plan x, y, la lentille a une surface carrée de côté D = Di (ou une surface circulaire de diamètre D=Di), avec Di = Th/ [cos(Θ2). nsub10) x 2λ/(π. wo), où nsub10 est l'indice du substrat 10.

Dans le cas d'un coupleur vertical 122 de type réseau de couplage surfacique tel que Θ2 # 0 et d'une structure de collimation permettant d'assurer le redressement du faisceau (c'est à dire, en sortie de 15, un angle du faisceau φ = 0), on peut trouver la position du motif le plus grand en dérivant l'équation (2) par rapport à n : c'est le motif d'abscisse X qui est le plus grand (celui à l'aplomb du point focal C122). Cette structure de collimation présente alors une symétrie circulaire autour de l'axe Ad, perpendiculaire au plan (x,y) et passant par le point Opv, Opv étant la projection orthogonale de C122 sur le plan (x,y) de la structure de collimation 15 (figure 7b). Dans le plan x,y, Opv est donc translaté, par rapport à C15, de X ~Th*tan Θ2 parallèlement à l'axe X.

Pour cette structure de collimation de symétrie circulaire autour d'un axe Ad décalé par rapport à l'axe médian Am, on peut réécrire les équations, non pas en fonction de $W_{Si}(0)$, mais en fonction de $W_{Si}(X)$ :

$$\frac{2\pi}{\lambda}\tilde{n}(x,y)h + \frac{2\pi}{\lambda}n_0\sqrt{F^2+(x-X)^2+y^2} = \frac{2\pi}{\lambda}\tilde{n}(X,0)h + \frac{2\pi}{\lambda}n_0F$$

$$\tilde{n}(x,y) = \tilde{n}(X,0) + \frac{n_0}{h}\left[F - \sqrt{F^2+(x-X)^2+y^2}\right]$$

Soit :

$$f_{Si}(x)$$

$$= \frac{\left[\sqrt{f_{Si}(X)*n_{Si}^2 + \left(1-f_{Si}(X)\right)*n_{SiO_2}^2} + \frac{n_0}{h}\left[F - \sqrt{F^2+(x-X)^2+y^2}\right]\right]^2 - n_{SiO_2}^2}{\left(n_{Si}^2 - n_{SiO_2}^2\right)}$$

Soit :

$$W_{Si}(n,p) = 2P.\sqrt{\frac{\left[\sqrt{\frac{\pi W_{Si}(X)^2*n_{Si}^2+(4P^2-\pi W_{Si}(X)^2)*n_{SiO_2}^2}{4P^2}} - n_0\frac{\left[\sqrt{F^2+(nP-X)^2+(pP)^2}-F\right]}{h}\right]^2 - n_{SiO_2}^2}{\pi\left(n_{Si}^2-n_{SiO_2}^2\right)}}$$

Lorsque X<D/2 avec D la largeur de la structure de collimation selon l'axe x, le motif le plus grand est celui d'abscisse X : $W_{Si-max} = W_{Si}(X) = P - cd\_min$.

On en déduit :

$$W_{Si}(n,p) = 2P.\sqrt{\frac{\left[\sqrt{\frac{\pi(P-cd\_min)^2*n_{Si}^2+(4P^2-\pi(P-cd\_min)^2)*n_{SiO_2}^2}{4P^2}} - n_0\frac{\left[\sqrt{F^2+(nP-X)^2+(pP)^2}-F\right]}{h}\right]^2 - n_{SiO_2}^2}{\pi\left(n_{Si}^2-n_{SiO_2}^2\right)}}$$

(3)

Il est également possible de déterminer le diamètre minimal $W_{Si-min}$ d'un motif, qui est le diamètre du motif le plus éloigné de l'abscisse X. On a: $W_{Si-min}$

$$= 2P.\sqrt{\frac{\left[\sqrt{\frac{\pi(P-cd\_min)^2 * n_{Si}^2 + (4P^2 - \pi(P-cd\_min)^2) * n_{SiO_2}^2}{4P^2}} - n_0 \frac{\left[\sqrt{F^2 + (NP+X)^2 + (NP)^2} - F\right]}{h}\right]^2 - n_{SiO_2}^2}{\pi(n_{Si}^2 - n_{SiO_2}^2)}}$$

$$= cd\_min$$

Cette dernière équation permet de déterminer l'épaisseur h de gravure minimale permettant de concevoir une structure de collimation techniquement réalisable, c'est-à-dire n'excédant pas cd_min et P-cd_min en diamètre de motifs, pour une largeur de lentille D donnée selon l'axe x:

$$h = n_0 \frac{2P\left[\sqrt{F^2 + (NP+X)^2 + (NP)^2} - F\right]}{\sqrt{\pi(P-cd\_min)^2 * n_{Si}^2 + (4P^2 - \pi(P-cd\_min)^2) * n_{SiO_2}^2} - \sqrt{\pi cd_{min}^2 * \left(n_{Si}^2 - n_{SiO_2}^2\right) + 4P^2 n_{SiO_2}^2}}$$

$$(3bis)$$

Par contre, si X>D/2, alors le motif le plus grand est celui qui est le plus proche de l'abscisse X. Prenant le cas X>0 où le motif le plus grand est celui d'indice N (pour X<0, il suffit de retourner la structure de collimation). On réécrit les équations par rapport à ce motif d'indice N :

$$\frac{2\pi}{\lambda}\tilde{n}(x,y)h + \frac{2\pi}{\lambda}n_0\sqrt{F^2 + (x-X)^2 + y^2} = \frac{2\pi}{\lambda}\tilde{n}(N,P)h + \frac{2\pi}{\lambda}n_0\sqrt{F^2 + (NP-X)^2}$$

Cela donne au final :

$$\tilde{n}(x,y) = \tilde{n}(N,P) - n_0 \frac{\sqrt{F^2 + (x-X)^2 + y^2} - \sqrt{F^2 + (NP-X)^2}}{h}$$

$$W_{Si}(n,p)$$
$$= 2P.\sqrt{\frac{\left[\sqrt{\frac{\pi W_{Si}(NP)^2 * n_{Si}^2 + (4P^2 - \pi W_{Si}(NP)^2) * n_{SiO_2}^2}{4P^2}} - n_0 \frac{\left[\sqrt{F^2 + (nP-X)^2 + (pP)^2} - \sqrt{F^2 + (NP-X)^2}\right]}{h}\right]^2 - n_{SiO_2}^2}{\pi(n_{Si}^2 - n_{SiO_2}^2)}}$$

En imposant la plus grande dimension au motif d'indice N, on a :

$$W_{Si}(n,p) =$$
$$2P.\sqrt{\frac{\left[\sqrt{\frac{\pi(P-cd\_min)^2 * n_{Si}^2 + (4P^2 - \pi(P-cd\_min)^2) * n_{SiO_2}^2}{4P^2}} - n_0 \frac{\left[\sqrt{F^2 + (nP-X)^2 + (pP)^2} - \sqrt{F^2 + (NP-X)^2}\right]}{h}\right]^2 - n_{SiO_2}^2}{\pi(n_{Si}^2 - n_{SiO_2}^2)}} \qquad (4)$$

Le plot de plus petite dimension est alors d'indice (-N,±N) :

$$W_{Si-min} = 2P.\sqrt{\frac{\left[\sqrt{\frac{\pi(P-cd\_min)^2 * n_{Si}^2 + (4P^2 - \pi(P-cd\_min)^2) * n_{SiO_2}^2}{4P^2}} - n_0 \frac{\left[\sqrt{F^2 + (NP+X)^2 + (NP)^2} - \sqrt{F^2 + (NP-X)^2}\right]}{h}\right]^2 - n_{SiO_2}^2}{\pi(n_{Si}^2 - n_{SiO_2}^2)}}$$

$$= cd\_min$$

Ce qui nous donne la valeur de h dans ce cas-là :

$$h = n_0 \frac{2P\left[\sqrt{F^2+(NP+X)^2+(NP)^2}-\sqrt{F^2+(NP-X)^2}\right]}{\sqrt{\pi(P-cd\_min)^2*n_{Si}^2+\left(4P^2-\pi(P-cd\_min)^2\right)*n_{SiO_2}^2}-\sqrt{\pi cd_{min}^2*\left(n_{Si}^2-n_{SiO_2}^2\right)+4P^2 n_{SiO_2}^2}} \quad \text{(4bis)}$$

(4bis)

La procédure de conception de la structure de collimation peut être la suivante :

1) Compte-tenu de P et cd_min, on détermine l'épaisseur nécessaire de la structure de collimation selon les équations (3bis) ou (4bis), selon que X<D/2 ou X>D/2.
2) On en déduit alors, avec l'épaisseur h trouvée précédemment, le profil exact de la structure de collimation selon les équations (3) ou (4), selon que X<D/2 ou X>D/2. Du calcul développé précédemment, le calcul de plots parallélépipédiques (et non plus cylindriques) est évident.

Dans une variante de réalisation, la structure de collimation ne forme pas l'équivalent d'une lentille simple mais l'équivalent d'une lentille de Fresnel. Selon cette approche, on impose une épaisseur h plus faible, et on autorise de plus grands gradients d'indice pour compenser cette faible épaisseur, ces gradients se répétant par des modulos $2\pi$ de phase pour couvrir toute la largeur de la structure de collimation. Selon cette approche :

$$\frac{2\pi}{\lambda}\tilde{n}(x,y)h + \frac{2\pi}{\lambda}n_0\sqrt{F^2+(x-X)^2+y^2} = \frac{2\pi}{\lambda}\tilde{n}(X)h + \frac{2\pi}{\lambda}n_0 F[2\pi]$$

$$\text{Soit } \tilde{n}(x,y) = \tilde{n}(X) - \frac{n_0}{h}\left[\sqrt{F^2+(x-X)^2+y^2}-F\right] + m\frac{\lambda}{h}, \text{m} \in Z^+$$

Soit

$$f_{Si}(x,y) = \frac{\left[\sqrt{f_{Si}(X)*n_{Si}^2+\left(1-f_{Si}(X)\right)*n_{SiO_2}^2}-\frac{n_0}{h}\left[\sqrt{F^2+(x-X)^2+y^2}-F\right]+m\frac{\lambda}{h}\right]^2-n_{SiO_2}^2}{\left(n_{Si}^2-n_{SiO_2}^2\right)}$$

Soit :

$$W_{Si}(n,p) = 2P.\sqrt{\frac{\left[\sqrt{\frac{\pi(P-cd\_min)^2*n_{Si}^2+\left(4P^2-\pi(P-cd\_min)^2\right)*n_{SiO_2}^2}{4P^2}}-n_0\frac{\left[\sqrt{F^2+(nP-X)^2+(pP)^2}-F\right]}{h}+m\frac{\lambda}{h}\right]^2-n_{SiO_2}^2}{\pi\left(n_{Si}^2-n_{SiO_2}^2\right)}} \quad \text{(5)}$$

Le terme m permet d'ajouter un incrément à la largeur pour éviter qu'elle n'aille en dessous de cd_min. Cependant, cet incrément ne doit pas faire passer la largeur au-delà de P-cd_min pour avoir le modulo $2\pi$ de phase, ou en-dessous de cd_min respectivement. Cela impose des contraintes sur l'épaisseur minimale de la lentille de Fresnel hmin, pour qu'elle soit techniquement réalisable. Supposons que l'un des motifs ait une largeur de cd_min (limite inférieure). Ce motif a un indice (n', p') qui vérifie:

$$\frac{cd\_min^2\pi\left(n_{Si}^2 - n_{SiO_2}^2\right) + 4P^2.n_{SiO_2}^2}{4P^2}$$

$$= \left[\sqrt{\frac{\pi(P - cd\_min)^2 * n_{Si}^2 + (4P^2 - \pi(P - cd\_min)^2) * n_{SiO_2}^2}{4P^2}} - n_0\frac{\left[\sqrt{F^2 + (n'P - X)^2 + (p'P)^2} - F\right]}{h}\right]^2$$

Il faut qu'un ajout de λ/h dans le carré du terme de droite génère une largeur inférieure à P-cd_min dans l'équation (5), soit :

$$P - cd_{min} \geq 2P.\sqrt{\frac{\frac{cd\_min^2\pi\left(n_{Si}^2 - n_{SiO_2}^2\right) + 4P^2.n_{SiO_2}^2}{4P^2} + \frac{\lambda^2}{h_{min}^2} + 2\frac{\lambda}{h_{min}}\sqrt{\frac{cd\_min^2\pi\left(n_{Si}^2 - n_{SiO_2}^2\right) + 4P^2.n_{SiO_2}^2}{4P^2}}}{\pi\left(n_{Si}^2 - n_{SiO_2}^2\right)}}$$

On en déduit donc qu'il y a une contrainte entre la longueur d'onde et l'épaisseur, pour une technologie donnée (P, cdmin), pour que la lentille de Fresnel soit réalisable.

$$\left[P\pi(P - 2cd_{min})\left(n_{Si}^2 - n_{SiO_2}^2\right) - 4P^2n_{SiO_2}^2\right].h^2 - \left[8P^2\lambda\sqrt{\frac{cd\_min^2\pi\left(n_{Si}^2 - n_{SiO_2}^2\right) + 4P^2.n_{SiO_2}^2}{4P^2}}\right]h - 4P^2\lambda^2 \geq 0$$

hmin correspond donc à la 2ème racine de l'équation afférente de 2nd degré, soit :

$$h_{min} = 2\lambda\frac{\sqrt{cd\_min^2\pi\left(n_{Si}^2 - n_{SiO_2}^2\right) + 4P^2.n_{SiO_2}^2} + \sqrt{\pi\left(n_{Si}^2 - n_{SiO_2}^2\right)(P - cd_{min})}}{\pi(P - 2cd_{min})\left(n_{Si}^2 - n_{SiO_2}^2\right) - 4Pn_{SiO_2}^2} \quad (6)$$

La période P ne peut pas excéder λ/2 pour que la structuration se comporte comme un milieu d'indice moyen. En imposant cette contrainte, on peut simplifier l'expression (6), et aboutir à :

$$h_{min} = 2\lambda\frac{2\sqrt{cd\_min^2\pi\left(n_{Si}^2 - n_{SiO_2}^2\right) + \lambda^2.n_{SiO_2}^2} + \sqrt{\pi\left(n_{Si}^2 - n_{SiO_2}^2\right)(\lambda - 2cd_{min})}}{\pi(\lambda - 4cd_{min})\left(n_{Si}^2 - n_{SiO_2}^2\right) - 4\lambda n_{SiO_2}^2}$$

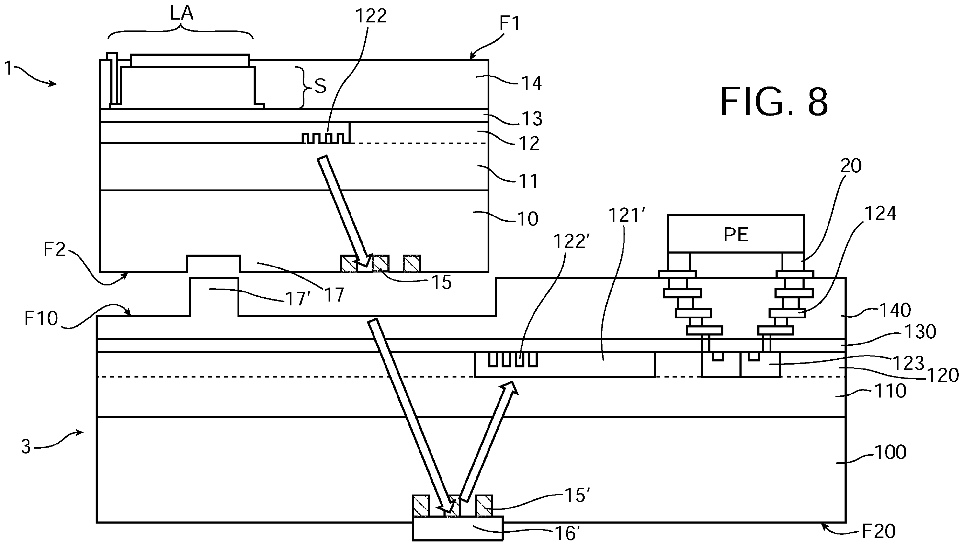

On a représenté sur la figure 8 le couplage d'une puce photonique 1 conforme à la figure 2 à une autre puce photonique 3 conforme à la figure 3. Dans cet exemple, les coupleurs verticaux des puces 1, 3 sont des réseaux de couplage surfacique 122, 122'. L'autre puce photonique 3 est formée sur un substrat SOI et comprend une couche de guidage de la lumière 120 recouverte d'une couche d'encapsulation 140 (comportant ici des niveaux de métal d'interconnexion) et séparée d'un substrat support 100 par une couche d'oxyde enterré en $SiO_2$ 110. Elle présente une face avant F10 du côté de la couche d'encapsulation 140 et une face arrière F20 du côté du substrat 100. Une lentille réfléchissante 15', 16' est intégrée au niveau de la face arrière F20. Cette lentille réfléchissante 15', 16' présente les mêmes caractéristiques que la lentille 15 intégrée au niveau de la puce 1 conforme à l'invention, hormis le fait que la hauteur des motifs est divisée par 2. La couche de guidage de la lumière 120 comprend un guide d'onde 121' et un réseau de couplage surfacique 122' qui est configuré pour émettre/recevoir la lumière vers/depuis le guide d'onde 121', mais en direction de la face de la puce opposée à la face vers laquelle sont orientées les dents du réseau (un tel réseau peut par exemple être conçu dans une couche de silicium d'épaisseur 160nm dans laquelle les dents de gravure du réseau sont gravées sur une profondeur de 90nm, ou bien une couche de silicium d'épaisseur 300nm dans laquelle les dents de gravure sont gravées sur toute l'épaisseur).

Un exemple de dimensionnement de la structure de collimation de la puce 1 de la figure 8 est le suivant. On utilise un réseau de couplage surfacique en guise de coupleur vertical (Do=9.2$\mu$m), réalisé en technologie photonique silicium, dans un substrat SOI. On utilise un substrat en silicium d'épaisseur Th = 775$\mu$m et d'indice nSi. Avec un angle de sortie du réseau de couplage surfacique $\Theta$1 dans le SiO2 égal à 8°, $\Theta$2 dans le silicium est égal à 3.3° ($n_{Si}$ x sin ($\Theta$2) = $n_{SiO2}$ x sin ($\Theta$1) avec $n_{Si}$ = 3.5 et $n_{SiO2}$ = 1.45). Le faisceau incident sur la lentille 15 a donc une taille de mode Th x 2$\lambda$ /($\pi$. wo x cos$\Theta$2. nSi) = Di ~40$\mu$m. Le centre de la structure de collimation est décalé du centre du coupleur vertical de X = Th x tan ($\Theta$2) ~ 44.8 $\mu$m On cherche une épaisseur des motifs, cylindriques, dans un réseau bidimensionnel à maille constante P, la plus faible possible. On fixe le diamètre minimal d'un motif à 80nm, et on considère une pseudo-période des structures gravées P = 500nm.

Avec les équations précédentes, on calcule l'épaisseur minimale des motifs de la structure de collimation dans le cas où elle du type lentille simple ou du type lentille de Fresnel. Dans l'application numérique retenue, l'épaisseur minimale est d'environ 1.5 $\mu$m pour le cas d'une lentille de Fresnel et de plusieurs $\mu$m pour le cas lentille simple. Puis on calcule les diamètres des motifs à graver pour former la structure de collimation en considérant $W_{Si-min}$=0,08 $\mu$m. Dans le cas de la puce 3 où la structure de collimation 15 est couplée à un miroir 16, l'épaisseur h des plots est divisée par 2.

Toujours en référence à la figure 8, et sans que cela ne soit exclusif de cet exemple de réalisation, la puce selon l'invention peut présenter en face arrière F2 des motifs d'alignement 17 avec l'autre puce 3, et notamment des motifs d'alignement 17 destinés à coopérer avec des motifs complémentaires 17' en face avant F10 de l'autre puce par exemple pour assurer un alignement mécanique des lentilles 15 et 15', 16' sur les faces arrière F2, F20 des deux puces 1, 3. Avec l'application numérique précédemment décrite, Di = 40$\mu$m pour un réseau de couplage surfacique de l'état de l'art 122, 122' et une lentille 15, 15' réalisée dans un substrat d'épaisseur 775$\mu$m. L'alignement entre les deux puces doit se faire à environ +/8$\mu$m (à comparer à +/-2$\mu$m lorsque l'on aligne deux coupleurs surfaciques de l'état de l'art).

On a par ailleurs représenté sur cette figure 8, une puce électronique PE solidarisée sur la face avant F10 de la puce photonique 3, par exemple au moyen de micro piliers de cuivre 20. La puce électronique PE, destinée à piloter ou lire les composants photoniques actifs de la puce 3, est donc raccordée, au moyen des micro piliers de cuivre 20 et de niveaux de métal 124 traversant la couche 140, aux composants photoniques actifs (comprenant par exemple un modulateur 123) formés dans la couche de guidage de la lumière 120.

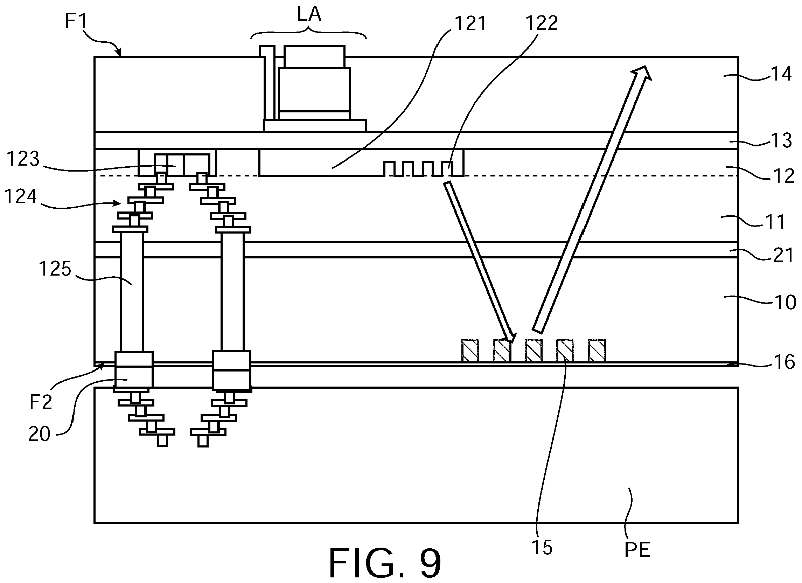

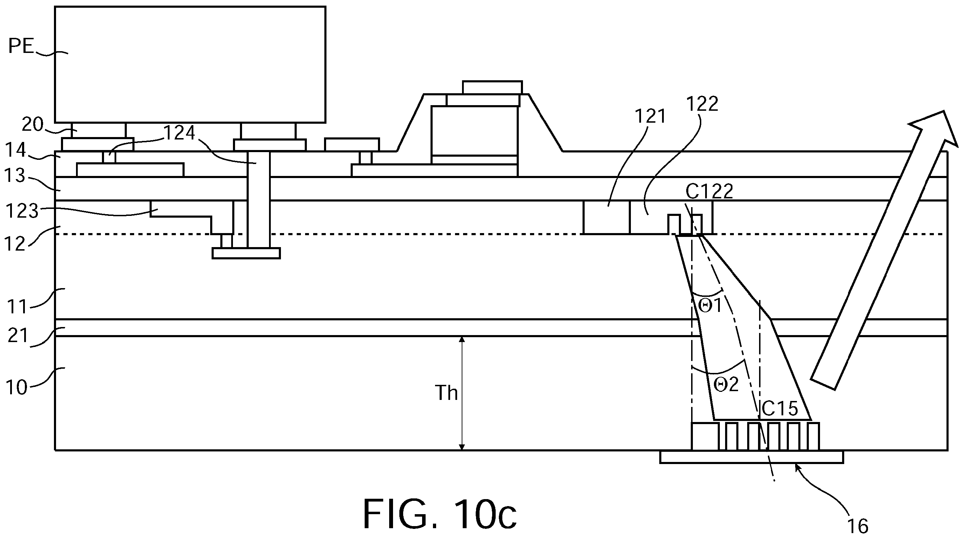

On a représenté sur la figure 9 une variante de réalisation d'une puce photonique conforme à la figure 3. Le substrat 10 est en matériau semiconducteur, typiquement en silicium, et séparé de la couche 11 par une couche antireflet 21. Le substrat 10 est recouvert côté face arrière d'une couche métallique 16 permettant de rendre la lentille 15 réfléchissante. On a par ailleurs représenté sur cette figure 9 une puce électronique PE solidarisée sur la face arrière F2 de la puce photonique, par exemple au moyen de micro piliers de cuivre 20. Cette puce PE, destinée à piloter ou lire les composants photoniques actifs, est raccordée, notamment au moyen de vias d'interconnexion électrique 125 traversant le substrat 10, à ces composants photoniques actifs (comprenant par exemple un modulateur 123) formés dans la couche de guidage de la lumière 12. Comme représenté sur la figure 10c, la puce électronique PE peut alternativement être agencée en face avant F1 de la puce photonique. Dans ce cas, les couches d'interconnections électriques 124 entre les composants actifs 123 et la puce électronique PE sont logées dans la couche 14 (et éventuellement la ou les couches 13 et 12) de la puce photonique.

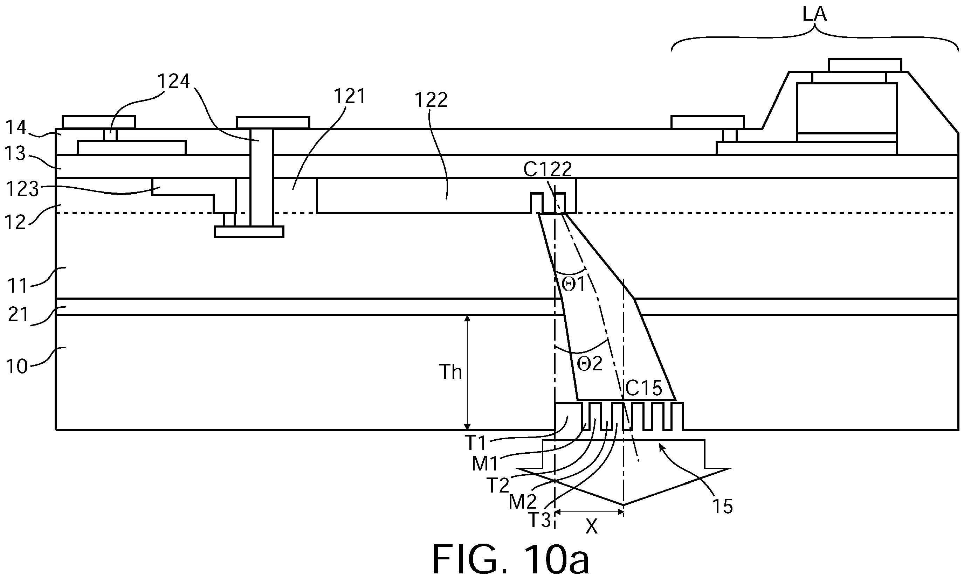

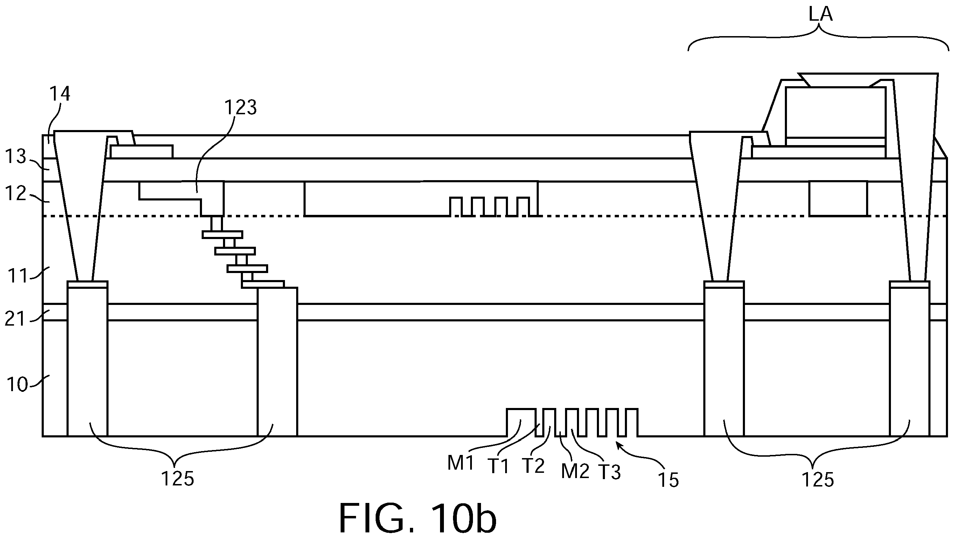

On a représenté sur les figures 10a et 10b différents modes de réalisation d'une puce photonique conforme à la figure 2 comprenant une couche antireflet 21 agencée entre la couche 11 et le substrat 10.

Dans le mode de réalisation représenté sur la figure 10a, la lentille 15 est configurée pour extraire la lumière la traversant depuis le coupleur vertical 122 selon la normale à la face arrière F2 de la puce. On a vu précédemment que le coupleur vertical 122 permet de passer d'une propagation guidée dans le plan de la puce à une propagation quasi-verticale formant un angle avec la normale à la face arrière de la puce (lors de sa traversée du substrat 10, le faisceau issu du réseau de couplage surfacique fait effectivement un angle $\Theta$2 non nul avec la verticale, par exemple de 4°). Il n'est en effet pas possible d'avoir un angle nul sans augmenter les pertes de couplage du réseau de couplage surfacique. Avec la lentille numérique, il est possible de redresser le faisceau pour qu'il soit perpendiculaire au plan de la puce en sortie de la lentille ($\phi$=0°). Le faisceau en sortie de la face arrière de la puce photonique est ainsi redressé et perpendiculaire aux faces avant et arrière de la puce.

Le fait d'extraire grâce à l'invention un faisceau collimaté de taille élargie permet d'augmenter la tolérance d'alignement de la puce avec une pièce d'interface opto-mécanique posée sur une face de la puce. Mais la tolérance angulaire de réception est réduite. En venant redresser le faisceau pour qu'il présente un angle de 90° avec la face arrière de la puce, le couplage avec la pièce d'interface est facilité. Ainsi la pièce peut être posée sur la surface plane de la puce, de façon rigoureusement perpendiculaire à elle. La problématique de sensibilité angulaire de l'alignement est ainsi complètement résolue, puisque la pièce opto-mécanique, en contact avec la face arrière F2 de la puce, est rigoureusement perpendiculaire à la puce, sans possible écartement angulaire.

Sur la figure 10a, on a représenté des électrodes pour des prises de contact électrique avec le laser LA et un modulateur 123 en face avant F1 de la puce photonique, avec des interconnections 124 logées dans les couches 14, 13 et 12. La puce de la figure 10a pourrait également utiliser une lentille 15 avec un miroir 16, de telle sorte que le faisceau soit extrait de la puce photonique par sa face avant F1 (cf. figure 10c). Sur la figure 10b, ces prises de contact sont toutes deux réalisées en face arrière par l'intermédiaire de vias d'interconnexion électrique 125. Cette configuration permet de placer un dissipateur thermique en face avant. Cette configuration permet également de disposer des interconnexions électriques et optiques en face arrière de la puce, ces interconnexions pouvant être reliées à un circuit intégré spécialisé par l'intermédiaire d'un substrat agencé du côté de la face arrière de la puce.

Un dimensionnement possible de la lentille 15 et du coupleur vertical 122 de la figure 10a est le suivant. On propose d'utiliser pour le coupleur vertical 122 un réseau de couplage surfacique conçu pour avoir une taille de mode $Do/2 = wo = 1.8\mu m$ ce qui, comme démontré précédemment, permet d'élargir sa bande spectrale par rapport à un réseau connu de taille de mode $wo = 4.6\mu m$ (bande spectrale élargie à 60nm contre 30nm). Un tel réseau de couplage donne lieu à un faisceau très divergent, qui ne permettrait pas de coupler efficacement la lumière dans une fibre monomode. L'invention, par l'utilisation de la lentille numérique permet de collimater le faisceau en sortie de la lentille, après la traversée du substrat 10. Avec une épaisseur de substrat $Th = 775\mu m$, on peut obtenir un faisceau collimaté avec une taille de mode élargie à environ $Di = 103\mu m$. En regard du système constitué par le réseau 122 et la lentille 15), un système 'expanded beam' (tel que décrit précédemment) permet de coupler efficacement la lumière dans la fibre.

Le système intégré à la puce {réseau de couplage surfacique à taille de mode réduite, hautement divergent, et lentille numérique en face arrière} permet ainsi de fournir un faisceau à taille de mode élargi par rapport à l'état de l'art d'un facteur 10, collimaté, redressé et de bande spectrale élargie. Ce système passe ainsi outre les inconvénients de l'état de l'art liés aux réseaux de couplages surfaciques (angle non nul avec la verticale, faible tolérance d'alignement avec une fibre, bande spectrale réduite).

Dans une variante de réalisation de la structure de collimation associée à la figure 10a ($Th = 775\mu m$, $Di = 103\mu m$), la lentille numérique ne forme pas l'équivalent d'une lentille simple mais l'équivalent d'une lentille de Fresnel. Selon cette approche, on impose une épaisseur plus faible des tranchées, et on autorise de plus grands gradients d'indice pour compenser cette faible épaisseur, ces gradients se répétant par des modulos $2\pi$ de phase pour couvrir toute la largeur de la structure de collimation. Dans ce cadre, nous prenons l'hypothèse de motifs cylindriques en silicium répétés à une période $P = 0.5\mu m$. Les motifs ont un diamètre minium de $cd\ min = 0.12\mu m$ et maximum de $P - cd\ min = 0.5 - 0.12\mu m = 0.380\mu m$. L'épaisseur minimale à graver est calculée à environ $1.3\mu m$, lorsque les motifs sont encapsulés dans l'air. La figure 12a donne le diamètre Dp de chacun des motifs en fonction de leur position X/P, Y/P dans le réseau de motifs formant une lentille qui ne redresse pas le faisceau. Le centre C15 de la lentille est décalé d'environ $\tan(\Theta 2) \times Th = 54.4\mu m$ par rapport à la projection orthogonale du centre C122 du réseau de couplage surfacique 122 sur le plan x,y de la lentille. La lentille 15 présente un axe de symétrie circulaire confondu avec son axe médian Am. Le centre du faisceau sur le plan de la lentille x,y est confondu avec le centre de la lentille C15. Cette lentille de la figure 12a dont le centre de symétrie circulaire coïncide avec son axe médian, n'assure pas le redressement du faisceau à sa sortie. La figure 12b rapporte une lentille réalisée suivant les mêmes contraintes de fabrication que la lentille de la figure 12a ($cd\ min = 0.12\mu lm$, $P - cd\ min\ max = 0.5 - 0.12\mu m = 0.380\mu m$, épaisseur des motifs $1.3\mu m$), et de même taille Di, mais assurant le redressement du faisceau ($\phi = 0°$). La figure 12b donne ainsi le diamètre Dp de chacun des motifs en fonction de sa position X/P, Y/P dans un réseau de motifs formant une lentille qui redresse le faisceau. Le centre C15 de la lentille est décalé de $X = 54.4\mu m$ par rapport à la projection orthogonale, Opv, du centre C122 du réseau de couplage surfacique sur le plan x,y de la lentille. La lentille 15 présente un axe de symétrie circulaire décalé de son axe médian. L'axe de symétrie circulaire est perpendiculaire au plan x,y et passe par Opv. Le centre du faisceau sur le plan de la lentille x,y est confondu avec le centre de la lentille C15.

Un dimensionnement possible de la lentille 15 et du réseau de couplage surfacique 122 de la figure 10b est le suivant. Le réseau de couplage surfacique 122 est conçu pour avoir une taille de mode $wo = 0,9\mu m$ afin d'élargir sa bande spectrale par rapport à un réseau connu de taille de mode $wo = 4.6\mu m$ (bande spectrale élargie à plus de 80nm contre 30nm). Un tel réseau de couplage donne lieu à un faisceau très divergent. L'invention, par l'utilisation de la lentille permet de collimater le faisceau en sortie de la puce, après traversée du substrat 10. Avec une épaisseur de substrat $Th = 200\mu m$, compatible à la fabrication des vias d'interconnexion électrique 125, il est possible d'obtenir un faisceau collimaté présentant une taille de mode élargie à environ $53\mu m$.

En sortie du réseau de couplage le faisceau divergent fait également un angle $\Theta 2$ non nul avec la verticale (dans cet exemple, égal à 4° dans le substrat 10 en silicium). Le centre de la lentille C15 doit être décalé par rapport à la projection orthogonale Opv du centre du réseau de couplage surfacique 122 d'environ $\tan(\Theta 2) \times Th = 14\ \mu m$. Avec la lentille numérique, il est possible de redresser le faisceau pour qu'il soit perpendiculaire au plan de la puce en sortie de la lentille.

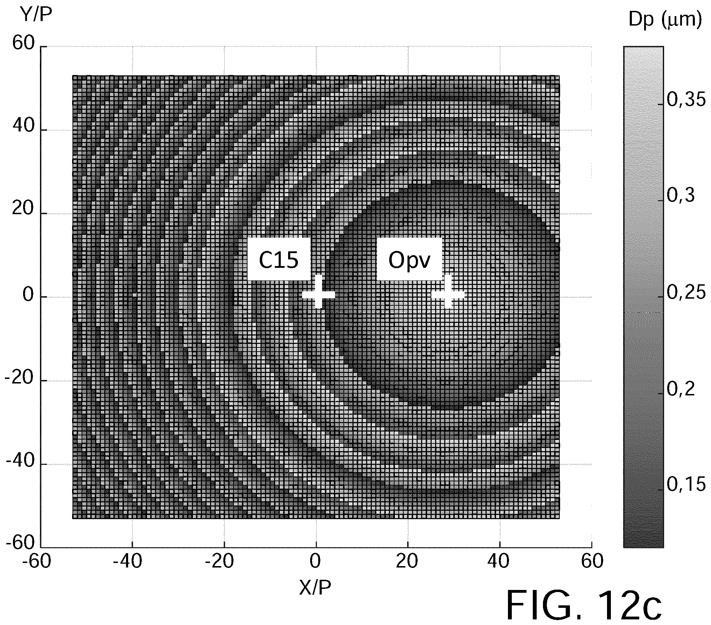

Dans ce cadre, nous prenons toujours l'hypothèse de motifs cylindriques en silicium répétés à une période $P = 0.5\mu m$. Les motifs ont un diamètre minium de $cd\ min = 0.12\mu m$ et maximum de $P - cd\ min = 0.5 - 0.12\mu m = 0.380\mu m$,

et sont encapsulés dans l'air. L'épaisseur minimale à graver est calculée à environ 1.3$\mu$m. La figure 12c donne le diamètre Dp de chacun des motifs en fonction de leur position X/P, Y/P dans le réseau de motifs formant une lentille qui redresse le faisceau. Le centre C15 de la lentille est décalé d'environ tan ($\Theta$2) x Th = 14 $\mu$m) par rapport à la projection orthogonale, Opv, du centre C122 du réseau de couplage surfacique sur le plan x,y de la lentille. La lentille a une symétrie circulaire autour de l'axe Ad, orthogonal au plan x,y de la lentille et passant par Opv.

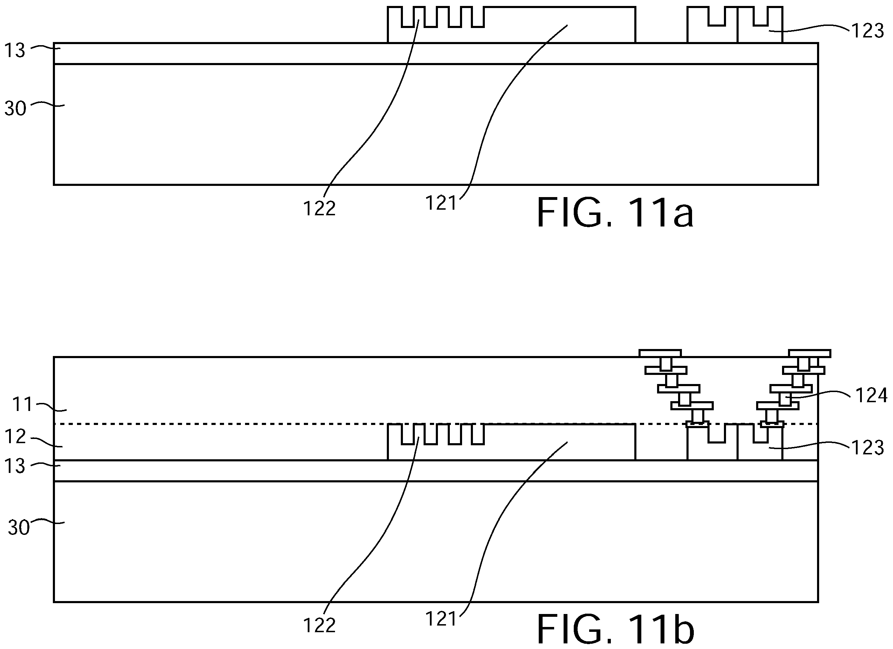

On décrit dans ce qui suit un exemple d'un procédé de réalisation d'une puce photonique conforme à l'invention et plus particulièrement d'une puce selon le second mode de réalisation représenté sur la figure 2. Le procédé débute (figure 11a) par la fourniture d'un substrat SOI présentant une couche d'oxyde enterré 13 intercalée entre une couche de silicium superficielle et un substrat de silicium 30 et par la fabrication des composants photoniques (guide d'onde 121, réseau de couplage surfacique 122, modulateur PN 123, etc.) par gravure localisée, partielle ou totale, de la couche de silicium superficielle et, implantation dans le cas du modulateur. Sur cette figure la lumière se propage perpendiculairement au plan de la figure pour le modulateur, et dans le plan de la figure pour le guide d'onde et le réseau de couplage surfacique.

On procède ensuite (figure 11b) à la formation d'une couche d'encapsulation BEOL 11 en matériaux diélectriques, cette couche comprenant des niveaux de métal d'interconnexion électrique 124 avec les composants photoniques actifs (ici le modulateur 123) de la couche de guidage de la lumière 12.

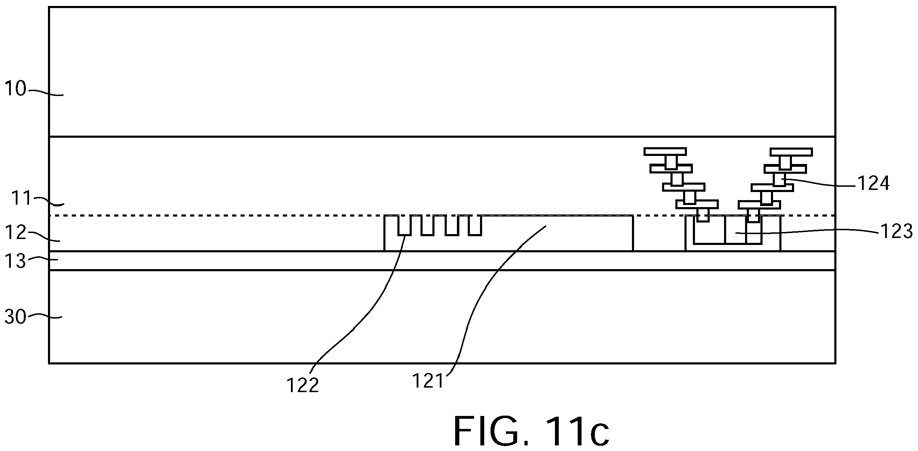

On reporte et on colle ensuite (figure 11c) un substrat 10 en silicium (qui peut être recouvert d'une couche antireflet, laquelle vient s'interposer après collage entre le substrat et la couche d'encapsulation 11), sur la couche d'encapsulation 11. Cette étape ne nécessite pas un alignement précis lors du collage (puisque les structures de collimation ne sont pas encore réalisées). Un amincissement du substrat 10 peut être réalisé si nécessaire pour atteindre une épaisseur typiquement comprise entre 50$\mu$m et 775 $\mu$m.

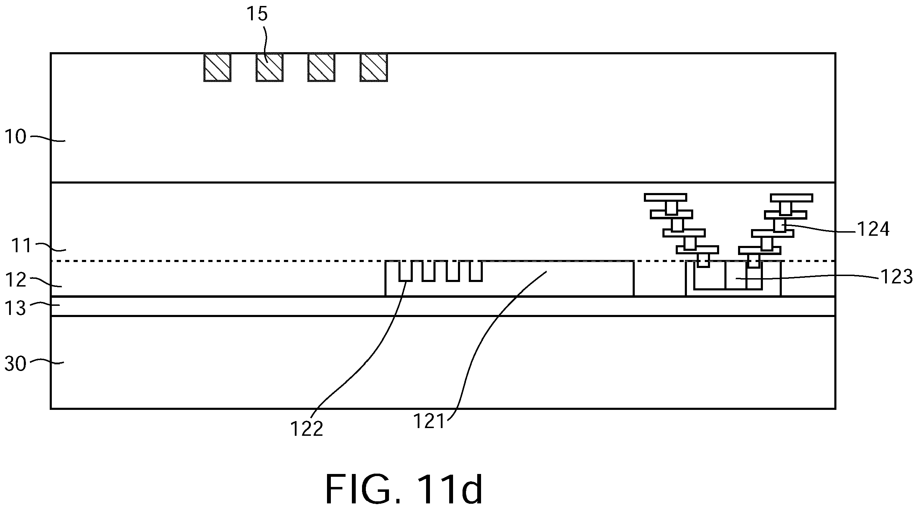

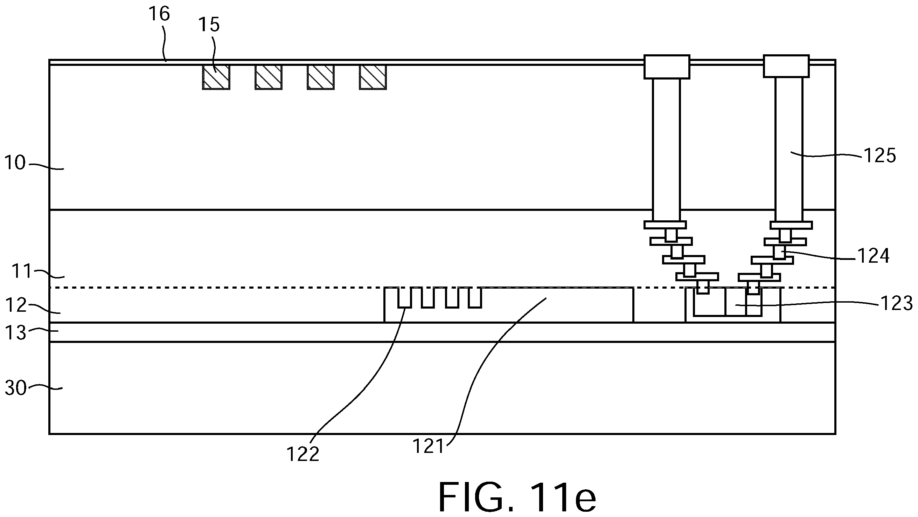

On procède ensuite (figure 11d) à la formation d'une lentille numérique 15 sur le substrat 10. La formation de la lentille 15 se fait par gravure de tranchées délimitant des motifs d'épaisseur invariable. Les tranchées sont ensuite remplies d'un matériau à faible indice, par exemple SiO2 affleurant la surface de la puce. On procède ensuite (figure 11e) au dépôt d'une couche métallique 16 sur la lentille 15 de manière à former une lentille réfléchissante.

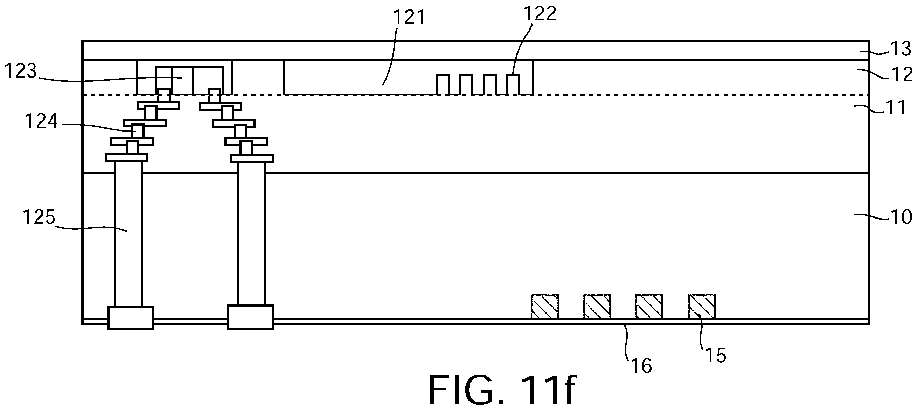

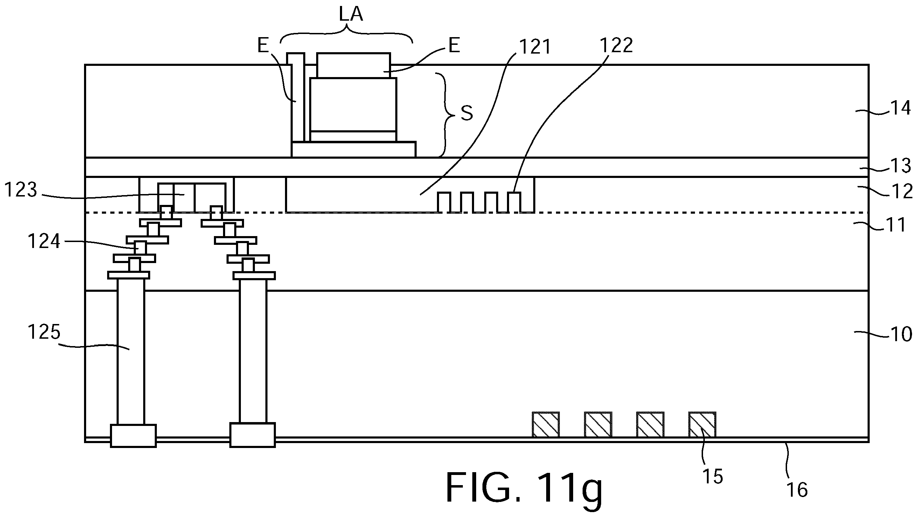

On procède ensuite à la formation de vias à travers le substrat 10, par exemple par gravure laser, et au remplissage de ces vias avec un métal pour former les vias d'interconnexion électrique 125 qui, reliés à ceux 124 présents dans la couche 11, permettent de relier les composants photoniques actifs (tels que le modulateur 123) à une puce électronique. On procède ensuite au retournement de la plaque et au retrait du substrat de silicium 30 (figure 11f). Le laser LA est ensuite fabriqué en venant réaliser un empilement S de couches III-V sur la couche 13, en structurant cet empilement pour former le milieu à gain du laser, en fabricant les électrodes E, et en formant la seconde couche d'encapsulation 14 (figure 11g).

L'invention n'est pas limitée à la puce photonique, mais s'étend également à son procédé de fabrication, et notamment à un procédé de fabrication de plusieurs puces collectivement sur une même plaque. Ce procédé comprend la formation de la structure de collimation au niveau de la face arrière de la puce et du coupleur vertical configuré pour recevoir de la lumière depuis la structure de guidage de la lumière et former un faisceau de lumière dirigé vers la structure de collimation.

L'invention s'étend également à un système comprenant la puce photonique selon l'invention et un dispositif extérieur doté d'une structure de collimation dont la taille de mode est adaptée à celle du faisceau lumineux en entrée/sortie de la puce photonique et qui est destinée à reconverger le faisceau sur une fibre monomode par exemple.

L'invention concerne également une telle puce photonique pouvant intégrer un ou des lasers hybrides, tel que des lasers présentant un milieu à gain réalisé en matériaux semi-conducteurs III-V sur un substrat silicium. Cette puce photonique est destinée à fournir un peigne de longueurs d'onde émis par la pluralité de lasers à une autre puce photonique ne comprenant pas de lasers (cf. figure 8 par exemple), ou bien destinée à émettre un faisceau de lumière en propagation libre.

## Revendications

**1.** Puce photonique (1, 2) comprenant une couche de guidage de la lumière (12) supportée par un substrat (10), une face avant (F1) du côté de la couche de guidage de la lumière (12), une face arrière (F2) du côté du substrat (10), une lentille (15) intégrée au niveau de la face arrière (F2), une structure de guidage de la lumière (121) dans la couche de guidage de la lumière et un coupleur vertical (122) dans la couche de guidage de la lumière, la structure de guidage de la lumière étant optiquement couplé au coupleur vertical lequel est configuré pour recevoir/transférer une lumière depuis/vers la structure de guidage de la lumière (121) et former/recevoir un faisceau de lumière en direction de/depuis la lentille (15), **caractérisée en ce que** la lentille (15) comprend une pluralité de tranchées (T1, T2, T3) pratiquées dans la face arrière (F2), les tranchées délimitant un réseau bidimensionnel de plots (M1, M2) et chaque plot présentant, dans une direction orthogonale aux faces avant et arrière, une épaisseur invariable.

**2.** Puce photonique selon la revendication 1, dans laquelle le substrat présente une épaisseur Th et un indice effectif n10, le faisceau de lumière fait un angle $\Theta2$ avec un axe perpendiculaire aux faces avant et arrière la lumière présente une longueur d'onde $\lambda$, le faisceau de lumière formé/reçu par le coupleur vertical présente une taille de mode Do=2.wo et le réseau bidimensionnel de plots a une dimension caractéristique supérieure ou égale à Th x $2\lambda /(\pi. wo \times \cos \Theta2. n10)$.

**3.** Puce photonique selon la revendication 2, dans laquelle le réseau bidimensionnel de plots comprend des cellules élémentaires se répétant périodiquement suivant une période P, chaque cellule élémentaire comprenant un plot et les dimensions des plots étant modulées d'une cellule élémentaire à l'autre, la période P étant de préférence inférieure à $\lambda/2$.

**4.** Puce photonique selon l'une des revendications 2 à 3, dans laquelle la lentille présente un centre (C15) et un axe médian (Am) orthogonal aux face avant et arrière passant par son centre, l'axe médian (Am) de la lentille et un axe orthogonal aux face avant at arrière passant par le centre (C122) du coupleur vertical étant décalés d'une distance Th*tan $\Theta2$.

**5.** Puce photonique selon la revendication 4, dans laquelle la lentille présente une symétrie circulaire autour de son axe médian (Am), les plots équidistants de l'axe médian étant de taille identique.

**6.** Puce photonique selon la revendication 4, dans laquelle la lentille présente une symétrie circulaire autour de l'axe orthogonal aux faces avant at arrière passant par le centre (C122) du coupleur vertical, les plots équidistants dudit axe orthogonal étant de taille identique.

**7.** Puce photonique selon la revendications 4, dans laquelle la lentille présente une symétrie circulaire autour d'un axe de symétrie orthogonal aux faces avant at arrière, l'axe de symétrie passant dans le plan de la lentille en un point situé entre le centre de la lentille et la projection du centre du coupleur vertical, les plots équidistants de l'axe de symétrie étant de taille identique.

**8.** Puce photonique selon l'une des revendications 1 à 7, dans laquelle les plots sont parallélépipédiques ou cylindriques.

**9.** Puce photonique selon l'une des revendications 1 à 8, dans laquelle la lentille est une lentille de Fresnel.

**10.** Puce photonique (2) selon l'une des revendications 1 à 9, dans laquelle la lentille est réfléchissante.

**11.** Puce photonique selon l'une des revendications 1 à 10, dans laquelle le coupleur vertical est un guide d'ondes à facette inclinée ou un réseau de couplage surfacique.

**12.** Puce photonique selon la revendication 11, dans laquelle le réseau de couplage surfacique est conformé pour recevoir/transférer de la lumière depuis/vers la structure de guidage de la lumière et former/recevoir un faisceau de lumière de taille de mode inférieure à 12$\mu$m, de préférence inférieure à 6 $\mu$m, en direction de/depuis la lentille.

**13.** Procédé de fabrication d'une puce photonique (1,2) comprenant une couche de guidage de la lumière (12) supportée par un substrat (10), la puce photonique présentant une face avant (F1) et une face arrière (F2) du côté du substrat (10), le procédé comprenant la formation d'une lentille (15) sur la face arrière et la formation, dans la couche de guidage de la lumière, d'une structure de guidage de la lumière et d'un coupleur vertical configuré pour recevoir de la lumière depuis la structure de guidage de la lumière et former un faisceau de lumière dirigé vers la lentille, **caractérisé en ce que** la formation de la lentille comprend la gravure d'une pluralité de tranchées (T1, T2, T3) dans la face arrière, les tranchées délimitant un réseau bidimensionnel de plots (M1, M2) et chaque plot présentant, dans une direction orthogonale aux faces avant et arrière, une épaisseur invariable.

FIG. 1

FIG. 2

FIG. 3

FIG. 4a

FIG. 4b

FIG. 4c

FIG. 5a

FIG. 5b

FIG. 6b

FIG. 6a

FIG. 7a

FIG. 7b

EP 3 521 879 A1

FIG. 8

EP 3 521 879 A1

FIG. 9

EP 3 521 879 A1

FIG. 10a

EP 3 521 879 A1

FIG. 10b

FIG. 10c

EP 3 521 879 A1

13

30

122    121    FIG. 11a

11

12

13

30

124

123

122    121    FIG. 11b

FIG. 11c

EP 3 521 879 A1

15

10

11

12

13

30

124

123

122   121

EP 3 521 879 A1

# FIG. 11d

FIG. 11e

EP 3 521 879 A1

FIG. 11f

FIG. 11g

EP 3 521 879 A1

FIG. 12a

FIG. 12b

FIG. 12c

FIG. 13a

FIG. 13b

EP 3 521 879 A1

FIG. 14a

FIG. 14b

FIG. 15

Europäisches
Patentamt

European
Patent Office

Office européen
des brevets

# RAPPORT DE RECHERCHE EUROPEENNE

Numéro de la demande

EP 19 15 5161

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 10 2014 219663 A1 (IHP GMBH [DE]; TECH UNIVERSITÄT BERLIN [DE]) 31 mars 2016 (2016-03-31) * alinéas [0055] - [0060] * * figures 6, 7 * | 1-13 | INV. G02B6/124 G02B6/30 G02B6/42 |
| A | US 2012/224810 A1 (DOERR CHRISTOPHER R [US]) 6 septembre 2012 (2012-09-06) * alinéas [0022] - [0048] * * figures 1, 2 * | 1-13 | |
| A | JINGHUI ZOU ET AL: "Two-dimensional grating coupler with a low polarization dependent loss of 025??dB covering the C-band", OPTICS LETTERS, vol. 41, no. 18, 8 septembre 2016 (2016-09-08), page 4206, XP055595495, US ISSN: 0146-9592, DOI: 10.1364/OL.41.004206 * page 4208 * * figures 6, 7 * | 1-13 | DOMAINES TECHNIQUES RECHERCHES (IPC) G02B |
| A | Mark S Mirotznik ET AL: "Design of two-dimensional polarization-selective diffractive optical elements with form-birefringent microstructures", Applied optics, 10 novembre 2004 (2004-11-10), page 5947, XP055595676, DOI: 10.1364/AO.43.005947 Extrait de l'Internet: URL:https://pdfs.semanticscholar.org/571f/11a4001bbfea4e7ff8b0cdef65cc442df9ac.pdf [extrait le 2019-06-11] * page 5947 - page 5948 * * figure 1; tableau 1 * | 1-13 | |

-/--

Le présent rapport a été établi pour toutes les revendications

| Lieu de la recherche | Date d'achèvement de la recherche | Examinateur |
|---|---|---|
| La Haye | 13 juin 2019 | Hohmann, Leander |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 19 15 5161

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2013/272652 A1 (YAACOBI AMI [US] ET AL) 17 octobre 2013 (2013-10-17) * alinéas [0070] - [0085] * * figures 7A, 9A-C * ----- | 1-13 | |
| A | US 2016/049528 A1 (CHO KEUN-YEONG [KR] ET AL) 18 février 2016 (2016-02-18) * alinéa [0153] * * figures 7A, 7B, 19 * ----- | 1-13 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 13 juin 2019 | Hohmann, Leander |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 15 5161

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-06-2019

| Document brevet cité au rapport de recherche | Date de publication | Membre(s) de la famille de brevet(s) | Date de publication |
|---|---|---|---|
| DE 102014219663 A1 | 31-03-2016 | CN 106796326 A<br>DE 102014219663 A1<br>DE 112015004443 A5<br>EP 3201664 A1<br>US 2017242191 A1<br>WO 2016050242 A1 | 31-05-2017<br>31-03-2016<br>20-07-2017<br>09-08-2017<br>24-08-2017<br>07-04-2016 |
| US 2012224810 A1 | 06-09-2012 | AUCUN | |
| US 2013272652 A1 | 17-10-2013 | US 2013272652 A1<br>WO 2013148208 A1 | 17-10-2013<br>03-10-2013 |
| US 2016049528 A1 | 18-02-2016 | CN 105374889 A<br>KR 20160019779 A<br>US 2016049528 A1 | 02-03-2016<br>22-02-2016<br>18-02-2016 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8515217 B

**Littérature non-brevet citée dans la description**

- **XIA CHEN.** Apodized Waveguide Grating Couplers for Efficient Coupling to Optical Fibers. *IEEE PHOTONICS TECHNOLOGY LETTERS,* 01 Août 2010, vol. 22 (15
- **SACHER, WESLEY D. et al.** Wide bandwidth and high coupling efficiency Si3N4-on-SOI dual-level grating coupler. *Optics express,* 2014, vol. 22.9, 10938-10947
- **B. BEN BAKIR et al.** Low loss (<1dB) and Polarization-Insensitive Edge Fiber Couplers fabricated on 200mm Silicon-on-Insulator wafers. *PTL,* 2009

- **S. BERNABÉ et al.** On-Board Silicon Photonics-Based Transceivers With 1-Tb/s Capacity. *IEEE Transactions on Components, Packaging and Manufacturing Technology,* Juillet 2016, vol. 6 (7
- **K. ADACHI et al.** Emission Beam Engineering of 1.3-$\mu$m High-power DFB Laser Using Monolithically-integrated Mirror and Lens for Silicon Photonics. *ECOC,* 2016